# EUROPÄISCHE PATENTSCHRIFT

(11) **EP 0 623 273 B1**
(45) Veröffentlichungstag und Bekanntmachung des Hinweises auf die Patenterteilung: **27.01.1999**
(21) Anmeldenummer: 94900047.5
(22) Anmeldetag: 19.11.1993
(51) Int. Cl.: H04Q 7/20

(54) **VERMITTLUNGSEINRICHTUNG UND -VERFAHREN FÜR EIN FUNKTELEFONIERSYSTEM MIT DEM CHARAKTER EINER ORTS- ODER NEBENSTELLENVERMITTLUNG**
SWITCHING EQUIPMENT AND METHOD FOR A RADIOTELEPHONE SYSTEM OF THE LOCAL OR PRIVATE BRANCH EXCHANGE TYPE
INSTALLATION ET PROCEDE DE COMMUTATION POUR SYSTEME DE RADIOTELEPHONIE DU GENRE A CENTRAL LOCAL OU A COMMUTATEUR PRIVE

(30) Priorität: 25.11.1992 DE 4240249
(43) Veröffentlichungstag der Anmeldung: 09.11.1994
(73) Patentinhaber: KRONE Aktiengesellschaft, 14167 Berlin (DE)
(72) Erfinder: Schiffel, Reinhard, 10119 Berlin (DE); Jäckel, Klaus, Dr.-Ing., 12623 Berlin (DE); Stadler, Bruno, Dr.-Ing., 12487 Berlin (DE); Vogel, Holger, Dipl.-Ing., 10365 Berlin (DE); Hachenberger, Andreas, 01478 Weixdorf (DE); Herold, Detlef, Dipl.-Ing., 03103 Neupetershain (DE)
(86) Internationale Anmeldenummer: DE9301100
(87) Internationale Veröffentlichungsnummer: WO9413112

(56) Entgegenhaltungen:
- GB-A- 2 174 571
- TELETTRA REVIEW Nr. 47 , 1991 , MILAN (IT) Seiten 69 - 80 XP404455 J.F. MONCALVILLO ET AL 'SMD 30/1.5-2.4 The solution to the rural telephony problem'
- NACHRICHTEN TECHNIK ELEKTRONIK Bd. 41, Nr. 4 , Juli 1991 , BERLIN DD Seiten 130 - 134 XP240831 W. KRÜGER 'Bündelfunknetz CHEKKER'

## Beschreibung

### Technisches Gebiet

Die Erfindung betrifft ein Funktelefoniesystem gemäß dem Oberbegriff des Anspruchs 1.

### Stand der Technik

Zu diesem technischen Gebiet sei auf die GB-A-2 174 571 verwiesen. Diese Druckschrift offenbart ein lokales Vermittlungs- und Übertragungssystem, welches als eine lokale Funkzelle, bestehend aus einer zentralen Funkfeststation und einer Vielzahl von dezentralen Teilnehmeranschaltgeräten organisiert und als Ortsvermittlungsstelle oder Nebenstelleneinrichtung an das öffentliche Fernmeldenetz angeschlossen ist und den Teilnehmern, die aus unterschiedlichsten Gründen nicht über Teilnehmerleitungen an eine Vermittlungseinrichtung angeschlossen werden können oder deren Anschluß in dieser Form nicht zweckmäßig ist, den Zugang zum öffentlichen Fernmeldenetz durch Einsatz drahtloser Übertragung ermöglicht, und bei welchem für den Betrieb des Systems bei einer Teilnehmerzahl größer als die Zahl der genutzten Duplex-Funkkanäle (im weiteren als Nachrichtenkanäle bezeichnet) in der zentralen Funkfeststation eine Funkvermittlungseinrichtung, die mindestens einen Duplex-Nachrichtenkanal als Standard-Organisationskanal für Signalisierung, Vermittlung, Verwaltung, Service und Sonderfunktionen im Funkbetrieb zwischen der Funkfeststation und den Teilnehmeranschaltgeräten benutzt, der von allen in Betrieb befindlichen, aber nicht aktiven Teilnehmeranschaltgeräten ständig empfangen und sendeseitig zeitmultiplex genutzt wird, und eine Fernmeldevermittlungseinrichtung, bei welcher an jeweils einen Port ein Nachrichtenkanal angeschlossen ist und welche die kanalbezogene Vermittlung durchführt, vorhanden sind, wobei die Funkvermittlungseinrichtung über einen Datenbus mit Steuer- und Schalteinrichtungen (im weiteren als Kanalcontroller bezeichnet) verbunden ist, die zwischen den Ports der Fernmeldevermittlungseinrichtung und den Nachrichtenkanälen angeordnet sind, und wobei der Kanalcontroller den Teilnehmeranschluß beim Aufbau von Fernmeldeverbindungen simuliert (die Simulierung wird auf Seite 5, Zeile 65 bis Seite 6, Zeile 2 der Entgegenhaltung beschrieben), bis über den Weg der Funkvermittlung die direkte Durchschaltung zum Teilnehmeranschaltgerät vorgenommen ist (letzteres beschreibt die Entgegenhaltung auf Seite 18, Zeilen 15 - 21).

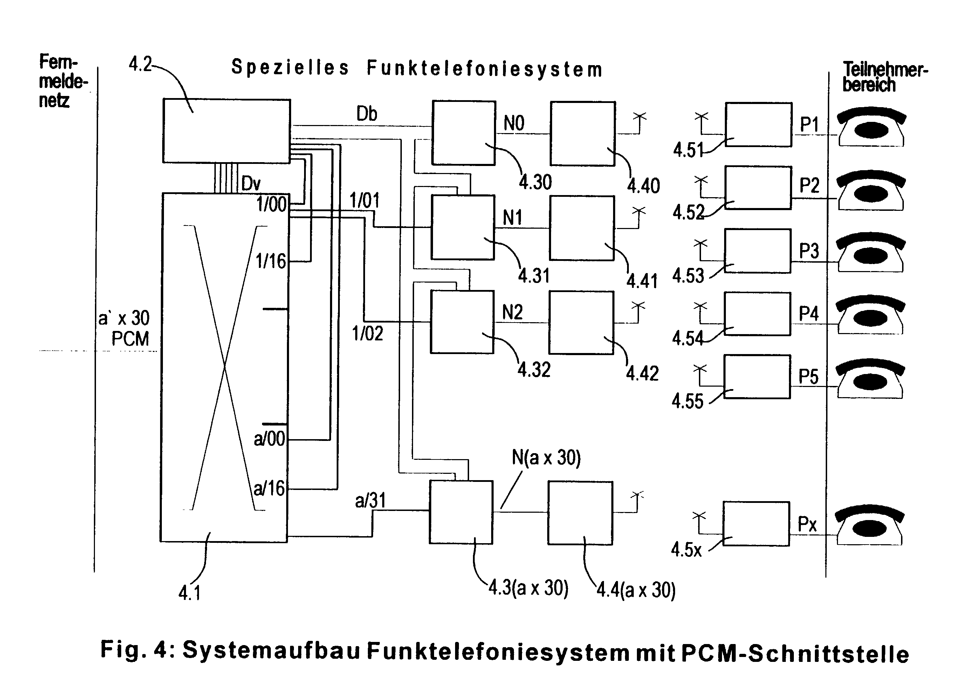

Gemäß dieser Druckschrift (siehe Seite 15, Zeilen 61 - 65, und Seite 16, Zeilen 1 - 40, und den zugehörigen Signalisationsschema gemäß Fig. 4, Blatt 4/22, siehe aber insbesondere Seite 16, Zeilen 21 - 25) wird ein Teilnehmeranschaltgerät B, das einen eingehenden Anruf einer anderen Teilnehmerstation A annimmt, eine Anruf-Annahme-Nachricht zurück zur Basisstation übertragen. Nach Sprachkanalsynchronisation erzeugt die angerufene Station B dort ein hörbares Klingelsignal für den gerufenen Anschlußinhaber, gleichzeitig aber auch einen Rückrufton über den Sprachkanal zur anrufenden Teilnehmerstation A.

Das ist insofern nachteilig, als es zu zusätzlicher Belegungszeit für die Strecke Basisstation - Teilnehmerstation B führt.

Eine Aufgabe der vorliegenden Erfindung ist es u.a., diesen Nachteil zu vermeiden.

Das bekannte Verfahren erlaubt nur die digitale Übertragung der Nutzinformation, wie sich aus Seite 1, Zeilen 11 - 27, ergibt. Demgegenüber ist es eine weitere Aufgabe der Erfindung, ein Verfahren zu schaffen, das für allgemeine Multiplexverfahren geeignet ist, also z.B. auch für Verfahren mit analoger Übertragung der Nutzinformationen, die beim Stand der Technik ausgeschlossen sind.

In der Entgegenhaltung, die die Anordnung gemäß dem Stand der Technik beschreibt, wird zwar von einem "standard telephone set" gesprochen, siehe dazu Seite 2, Zeilen 17 - 19, oder Seite 6, Zeilen 20 - 22 und Zeilen 27 - 32, grundsätzlich schreibt sie jedoch ein spezielles Endgerät vor, bei welchem dem Teilnehmer kein Wählzeichen gegeben wird und die Eingabe von Wahlnummern vor dem Aufbau der Funkverbindung zur Basisstation erfolgt und das Ende der Wahleingabe mit Betätigung der Sendetaste oder durch Ablauf einer "time-out" erfolgt (siehe Seite 15, Zeilen 61 - 65, und Seite 16, Zeilen 1 - 2). Eine weiter Aufgabe der Erfindung ist daher die Schaffung eines Verfahren, das auch die Anschaltung von Standart-Endgeräten ermöglicht (a/b-Schnittstelle, der Teilnehmer erhält nach dem Abheben ein Wählzeichen und der Aufbau der Funkverbindung zur Basisstation erfolgt parallel zur Wahleingabe, so daß nach Beendigung der Wahleingabe keine Betätigung einer Sendetaste oder Ablauf einer time-out erforderlich ist).

Gemäß dem Stand der Technik wird die von einem Teilnehmer gewählte Rufnummer gemeinsam mit der Verbindungsanforderung als "CALL REQ" in einem Organisationskanal übertragen (siehe Seite 15, Zeilen 61 - 65, und Seite 16, Zeilen 1 - 2). Weitere Aufgabe der Erfindung ist ein Verfahren zu schaffen, bei dem ein Funkvermittlungsprotokoll vorgesehen werden kann, bei welchem im Organisationskanal nur die Verbindungsanforderung (Wahlwunsch WW) übertragen wird und die Übertragung der gewählten Rufnummer nach dem Aufbau der Funkverbindung im Gesprächskanal erfolgt.

Der Stand der Technik stützt sich auf die in der Mobiltelefonie üblichen Verfahren und auf Funkvermittlungsprotokolle. Das ist für die hier vorgesehenen Anwendungsbereiche mit Nachteilen verbunden. Die Erfindung soll demzufolge ein Verfahren ermöglichen, bei dem auch die Bereitstellung einer a/b-Schnittstelle (TIP/RING) beim Teilnehmer und Nutzung beliebiger für diese Schnittstelle geeigneter Endgeräte möglich ist.

Dabei sollte insbesondere darauf geachtet werden, daß keine vom Standardtelefon abweichende Bedienung oder Eigenschaften wirksam werden.

Gelöst wird die Aufgabe dadurch, daß gemäß den kennzeichnenden Merkmalen des Anspruchs 1 der Aufbau der Funkverbindung während des Wahlvorganges des Teilnehmers erfolgt, daß die Wahlziffern über den zugewiesenen Gesprächskanal übertragen werden, und daß der Teilnehmer nach durchgeführter Wahl direkt an das Netz geschaltet ist und somit für den Teilnehmer keine Abweichung vom verkabelten a/b-Hauptanschluß feststellbar ist.

Dadurch kann die Belegung der Übetragungsstrecke zum Teilnehmer B verkürzt werden, was die Kosten der Gesamtanordnung sowie die späteren Betriebskosten verringert. Diese Merkmale erlauben aber auch die Lösung der weiteren obigen Teilaufgaben, wobei z.T. auch auf die Untersansprüche verwiesen sei.

Im übrigen sei noch folgendes zu bisher bekannt gewordenen Verfahren ausgeführt:

Multiusersysteme zum funkgestützten Anschluß von Fernmeldeteilnehmern an die öffentlichen Fernmeldenetze sind vielfältig im Einsatz. Hierbei handelt es sich vor allem um folgende Kategorien:
1. Mobilfunknetze
   Diese sind vor allem gekennzeichnet durch die Eigenschaften roaming und handover (overload) mit allen daraus resultierenden Konsequenzen für die Netzsteuerung und die Forderung nach Einsatzmöglichkeit der Mobilgeräte bei hohen Geschwindigkeiten von bis zu 200 km/h und den daraus resultierenden Forderungen an die Funkübertragungsverfahren.
2. Chekkernetze
   Diese besitzen wie die Mobilfunknetze die Eigenschaften roaming und handover, sind jedoch bezüglich Teilnehmerspektrum, territorialer Ausdehnung, Funktionalität und insbesondere Zugang zu den öffentlichen Netzen gegenüber den vorgenannten Einschränkungen unterworfen.
3. Netze auf der Basis der Technik schnurloser Telefone
   Hier werden vor allem Lösungen angeboten, die die Bindung des schnurlosen Telefons an einen bestimmten Hauptanschluß aufheben und durch Einführung eines handover den territorialen Einsatzbereich auf den Bereich einer PABX ausdehnen sollen.
4. DAL (Drahtlose Anschlußleitung)
   Diese sind gekennzeichnet durch den drahtlosen Anschluß stationärer Teilnehmer bei einer teilnehmergleichen Anschaltung des Funkübertragungssystems Das heißt, daß in der Fernmeldevermittlung für jeden Funkteilnehmer ein eigener Teilnehmeranaschluß vorhanden ist und die Funkübertragungseinrichtung zwischen diese Teilnehmeranschlüsse und die Funkteilnehmer eingefügt ist.
5. Rural Networks
   Diese sind dadurch gekennzeichnet, daß sie von einem Zentralknotenamt oder Knotenamt ausgehend eine point to multipoint - Verbindung in territorial weit entfernte Gebiete herstellen, wobei Funkverbindungen genutzt werden. Dabei werden Kanalbündel übertragen, die auf dem Übertragungsweg in mehreren Ebenen gesplittet werden können und zu mehreren Endpunkten übertragen werden. Von diesen Endpunkten ausgehend werden die Teilnehmer meist über Kabelwege angeschaltet, bei Nutzung von Funk erfolgt meist eine kanalgleiche Anschaltung. In den rural networks werden keine Vermittlungsfunktionen ausgeführt.

Funktelefoniesysteme sind umfangreich in Anwendung und zumeist als Mobiltelefonsysteme ausgelegt. Das bedingt, daß sie als zellulare Systeme aufgebaut sind und flächendekkende ein größeres Territorium versorgen, in welchem sie den Teilnehmern die mobile Teilnahme am Fernmeldeverkehr ermöglichen. Hierzu müssen diese Systeme die Eigenschaften Overload und Roaming realisieren, d.h., der Teilnehmer muß bei der mobilen Nutzung beim Wechsel von einer in eine benachbarte Funkzelle "weitergereicht" werden und das System muß den aktuellen Aufenthaltsort eines mobilen Teilnehmers gespeichert haben, um einen Ruf für den Teilnehmer vermitteln zu können.
Diese Systeme arbeiten deshalb im allgemeinen mit einem Overlaynetz, welches die einzelnen Funkzellen untereinander verbindet und über welches die gesamte Steuerung des Systems sowie die Fernmeldeverbindungen der Teilnehmer übertragen werden. Dieses Overlaynetz hat nur an wenigen ausgewählten Punkten Übergänge in das allgemeine Fernmeldenetz, Verbindungen von einem Netz in das andere sind über eine spezielle Vorwahl herstellbar.
Durch diese Einrichtungen sind Mobiltelefonsysteme wesentlich teuerer als die stationäre Fernmeldeversorgung, was sich sowohl in den Pauschalen als auch in den Gesprächsgebühren niederschlägt.
Ein weiterer Unterschied zum Standardtelefon ist, daß spezielle Endgeräte zum Einsatz kommen, die erstens teuer sind, da ihre Funkkomponenten für den mobilen Einsatz tauglich sein müssen, und die zweitens eine von Standardendgeräten abweichende Bedienung aufweisen.

Das Einsatzgebiet der Mobiltelefonsysteme ist daher vorwiegend die Ergänzung eines bestehenden und voll ausgebauten stationären Fernmeldesystems.

Der Einsatz von Funktelefoniesystemen im Teilnehmerbereich als Bestandteil des stationären Fernmeldesystems ist wenig gebräuchlich, da im allgemeinen die Verbindung des Teilnehmerendgerätes über eine Teilnehmeranschlußleitung mit der nächstgelegenen Fernmeldevermittlungseinrichtung eine kostengünstige Lösung für Fernmeldesysteme, die kontinuierlich historisch gewachsen sind, darstellt.
Abweichende Bedingungen, die zur Veränderung dieser Aussage führen, können sein:
- Es sind fernmeldemäßig unterversorgte Gebiete innerhalb von kürzester Zeit zu erschließen, so daß die Ortsverkabelung zum kapazitätsmäßigen Engpaß (Material- und Arbeitskapazität) und zur finanziellen Überbelastung wird.
- Es sind stark zersiedelte ländliche Gebiete zu erschließen, wodurch die Kosten einer Verkabelung überdurchschnittlich steigen würden.
- Es sind Gebiete mit schwierigen geologischen Bedingungen (Felsboden, Sumpfgebiete etc), schwierigen klimatischen Bedingungen (ewiger Frostboden, tropische Regengebiete etc.) oder schwierigen morphologischen Bedingungen (tropischer Regenwald) zu erschließen, wodurch Kabelverlegungen teuer oder zum Teil auch unmöglich werden.

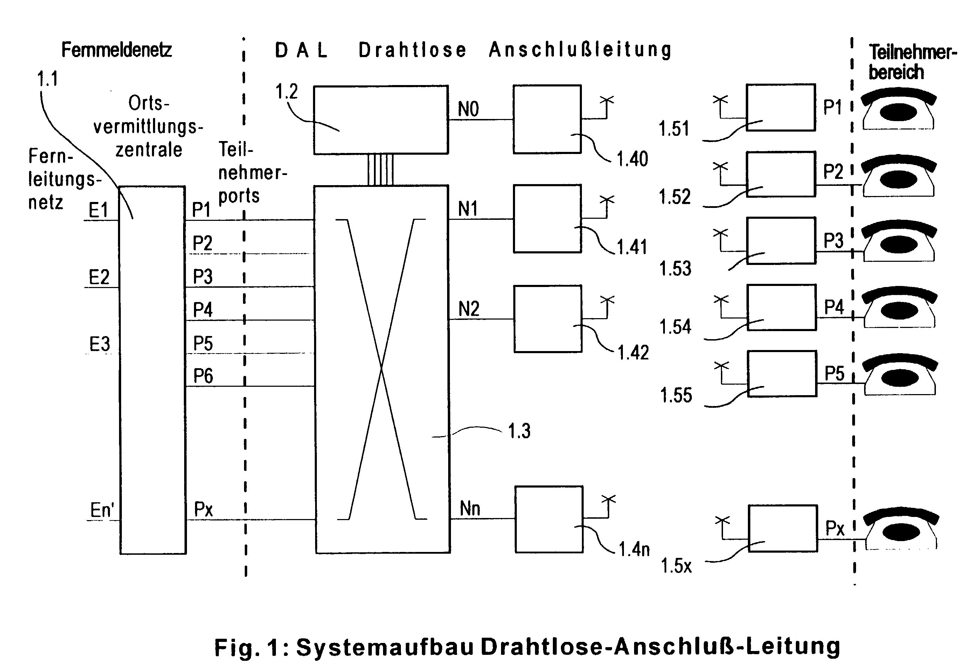

Ein derartiges System ist zum Beispiel DAL (Drahtlose Anschlußleitung), das vor allem unter den Gesichtspunkten eingesetzt wird, die obenstehend im ersten Anstrich genannt sind.
Diese Kommunikationstechnologie besitzt einen prinzipiellen Aufbau entsprechend **Fig. 1**. Grundlegendes Merkmal ist, daß eine Onsvermittlungseinrichtung **1.1** vorhanden sein muß. die nicht Bestandteil des Systems DAL ist, die über die Eingänge El bis En' an das Fernmeldenetz angeschlossen ist und über eine freie Kapazität von Ein-/Ausgangsschnittstellen, im weiteren Ports genannt, (Ports Pl bis Px) verfügt, die mindestens gleich der Anzahl der anzuschließenden Funkteilnehmer sein muß.
Die Einrichtung DAL verfügt, wie in **Fig. 1**. dargestellt, über eine Vermittlungseinrichtung **1.3**, deren Eingänge an die Ports der Ortsvermittlungseinrichtung **1.1** angeschlossen sind und die die Vermittlung auf die Ausgänge Nl bis Nn durchführt, an welche die Nachrichtenkanäle **1.41** bis **1.4n** angeschlossen sind, wobei x >> n > n' gilt. Bei Verbindungsbedarf werden von einer Steuereinheit **1.2** jeweils der Port Pi und das Teilnehmeranschaltgerät **1.5i** auf einen freien Nachrichtenkanal **1.4j** vermittelt bzw. die entsprechende Frequenzkommandierung vorgenommen.
Die Kommandierung der Teilnehmeranschaltgeräte erfolgt von der Steuereinheit über einen Ausgang N0, an welchen der Nachrichtenkanal **1.40** angeschlossen ist, der als Organisationskanal benutzt und von allen nicht aktiven Teilnehmeranschaltgeräten ständig empfangen wird.
Ein derartiges Konzept kann als 1 : 1 - Anschaltung bezeichnet werden, ist bezüglich des Steuerungsaufwandes mit relativ geringem Aufwand realisierbar und kann bei Bedarf problemlos durch eine Verkabelung der Teilnehmeranschlüsse ersetzt werden. Nachteilig ist der hohe Aufwand, der in der mehrfachen Hintereinanderschaltung von Vermittlungseinrichtungen enthalten ist.

Die erfindungsgemäße Lösung hat im wesentlichen Übereinstimmung in der Zielstellung mit den DAL-Systemen, vermeidet jedoch durch ihre spezielle Lösungskonzeption die funktionellen und ökonomischen Nachteile der "teilnehmergleichen Anschaltung" von DAL. Erst in zweiter Näherung gibt es Bezüge zu Lösungen auf der Basis der Technik schnurloser Telefone, wobei die durch diese Technik bedingten Begrenzungen durch die erfindungsgemäße Lösung aufgehoben werden.
Von den anderen Kategorien setzt sich die erfindungsgemäße Lösung bereits bezüglich der Zielstellung und damit auch der Lösungsansätze und Lösungswege deutlich ab und tritt damit auch zu diesen Systemen in keine Konkurrenz.

In (1) wird eine Systemkonfiguration beschrieben, die der gleichen Zielstellung wie die vorliegende Erfindung entspricht, jedoch auf der Ausschreibung der DBP vom Dezember 1991 zum DAL-System (DAL- Drahtlose Anschlußleitung) beruht und unter Nutzung von Komponenten der Mobilfunktechnik NMT-900 (Nordic-Mobile-Telefonsystem 900 MHz) aufgebaut ist. Grundlegender Unterschied ist, daß die Anschaltung der Funkvermittlungsstelle an die Ortsvermittlungsstelle (OVSt) über eine Zweidrahtverbindung an der a/b-Schnittstelle des Hauptverteilers vorgenommen wird, wodurch eine "teilnehmergleiche Anschaltung" erreicht wird.
Diese Konzeption hat zwar den Vorteil, daß eine weitgehende Kompatibilität mit den in weniger entwickelten Ländern üblichen Vermittlungszentralen sichergestellt wird, setzt aber voraus, daß Vermittlungszentralen mit einer Anzahl von freien a/b-Schnittstellen vorhanden sind, die der Anzahl der geplanten Funkteilnehmer entspricht, was im allgemeinen nicht gegeben ist. Zum anderen entsteht eine ökonomisch unvertretbare Lösung dadurch, daß an jede a/b-Schnittstelle der Vermittlungseinrichtung ein DAL-Umsetzer angeschaltet werden muß, der eine Wandlung von der Zweidrahtschnittstelle auf eine Vierdrahtschnittstelle vornimmt, den Verkehr konzentriert, ein Telefonendgerät an der a/b-Schnittstelle der Ortsvermittlungsstelle simuliert und die Wahlinformation, die ein MSC (Mobile Switching Center) in einem echten NMT 900-Mobilfunknetz normalerweise an seinem Eingang erwartet, erzeugt.

Demgegenüber ist bei der vorliegenden Erfindung die Fernmeldevermittlungseinrichtung Bestandteil des Gesamtsystems und es ist statt der "teilnehmergleichen Anschaltung" eine "kanalgleiche Anschaltung" vorgenommen, d.h. die Vermittlungseinrichtung vermittelt ohne Umweg über die Teilnehmerebene direkt auf die verfügbaren Funkkanäle und ist fernmeldetechnisch als Durchwahleinrichtung geschaltet. Damit verringert sich die Anzahl der Anschalteinheiten auf die Anzahl der Funkkanäle und der Funktionsumfang der Anschalteinheiten wird verringert. Desweiteren kann eine zelleninterne Vermittlung erfolgen, was bei entsprechender Teilnehmerstruktur die Anzahl der Kanäle in das öffentliche Netz erheblich verringert und bei der Lösung in (1) nicht möglich ist.

Die Darstellung in (2) hat direkten inhaltlichen Bezug zu (1). Hier wird vor allem die Einsatzstrategie behandelt und dazu dargestellt, daß die DAL-Systeme als Übergangslösung gedacht sind, die zu gegebener Zeit durch eine Verkabelung des Teilnehmeranschlußbereiches ersetzt werden, worauf die bereits bei der Abhandlung zu (1) benannten Nachteile und Beschränkungen beruhen.
Ein wesentlicher Nachteil der in (2) beschriebenen Lösung von DAL auf der Grundlage analoger zellularer Mobilfunktechnik ist, daß zwar beim Teilnehmer jedes für den Anschluß an eine a/b-Schnittstelle zugelassene Endgerät (Telefon, Fax. Moden u.a.) benutzt werden kann, die Zuweisung eines Funkkanals jedoch erst nach Wahl der letzten Wahlziffer und einer einstellbaren Wartezeit erfolgt. Diese Eigenschaft resultiert aus der quasi nicht modifizierten Verwendung von Mobilfunkkomponenten. die abweichend von der a/b-Schnittstelle erst nach vollständiger Wahleingabe und einem manuellen Startsignal am Mobilgerät die Wahlanforderung an die Basisstation übertragen. Bei der in (1) und (2) beschnebenen Lösung wird das manuelle Startsignal durch Ablauf eines Zeitschalters ersetzt, der bei jeder Eingabe einer Wahlziffer wieder auf Null gesetzt und neu gestartet wird.
Dies führt dazu, daß der Teilnehmer nach Eingabe der Wahlziffern über einen längeren Zeitraum keine Rückmeldung über abgehenden Ruf erhält und einige automatisch arbeitende Teilnehmerendgeräte an diesen DAL-Anschlüssen nicht betrieben werden können.

Im Gegensatz hierzu beinhaltet die vorliegende Erfindung ein spezielles Funkvermittlungsverfahren, welches den Aufbau der Funkverbindung bereits während des Wahlvorgangs des Teilnehmers durchführt und gewährleistet, daß die letzten vom Teilnehmer gewählten Wahlziffern bereits "real time" über den zugewiesenen Gesprächskanal übertragen werden und der Teilnehmer nach durchgeführter Wahl bereits direkt an das Netz angeschaltet ist und Ruf- oder Besetztzeichen direkt von der Gegenstelle erhält und somit auch in diesem Punkt für den Teilnehmer keine Abweichung vom verkabelten a/b-Hauptanschluß feststellbar ist.

In (3) wird eine Systemkonfiguration beschrieben, die der gleichen Zielstellung wie die vorliegende Erfindung entspricht, deren Lösungskonzept jedoch identisch mit (1) und (2) ist. Das heißt, daß der grundlegende Unterschied zur vorliegenden erfindungsgemäßen Lösung darin besteht, daß die Anschaltung der Funkvermittlungsstelle an die Ortsvermittlungsstelle (OVSt) über eine Zweidrahtverbindung an der a/b-Schnittstelle des Hauptverteilers vorgenommen wird, wodurch eine "teilnehmergleiche Anschaltung" erreicht wird. Damit gelten hier die gleichen Einschätzungen wie zu (1) und (2).

In (4) wird eine Systemkonfiguration beschrieben, die einer ähnlichen Zielstellung wie die vorliegende Erfindung entspricht, jedoch in wesentlichen Erfindungsmerkmalen abweicht So wird hier davon ausgegangen, daß eine "PABX-CPU" für alle Vermittlungs- und Leistungsmerkmalssteuerungsaufgaben und eine "Mobile CPU" für die Verbindungsaufbau/abbausteuerung für die schnurlosen Endgeräte über einen gemeinsamen Bus zusammenarbeiten und die "Mobile CPU" untergeordnet ist. Dies hat die Konsequenz, daß die "Mobile CPU" für eine bestimmte PABX angepaßt entwickelt werden muß oder nur mit einer bestimmten, angepaßt entwickelten PABX zusammenarbeiten kann.

Demgegenüber geht die vorliegende erfindungsgemäße Lösung davon aus, daß zumindest in einer Variante eine Funkvermittlungseinrichtung ausschließlich über E&M-Schnittstellen (physische E&M-Schnittstellen oder E&M-konfigurierte PCM-Schnittstelle) oder auch andere Schnittstellen einer PABX oder PSTN mit der PABX oder PSTN verbunden ist und keine Busverbindung und auch keine Unterordnung bestehen. E&M - Ports oder E&M-Schnittstellen sind Ein-/Ausgangsschnittstellen (physische oder logische 6 Draht-Ein/Ausgangsschnittstellen mit je 2 Leitungen für Audiosignalübertragung und 2 Leitungen für richtungsselektive Leitungsbelegung/Belegungsquittung bzw. richtungsselektive Impulswahlübertragung). Dadurch wird die Anschaltung an beliebige, ggf. am geplanten Einsatzort bereits vorhandene PABX oder PSTN ermöglicht, was besonders in Entwicklungsländern von Bedeutung sein kann.

Desweiteren ist ein Merkmal von (4), daß keine Vermittlung im Funkbereich, sondern nur Verbindungsaufbau/-abbau zwischen Teilnehmerschnittstellenmodulen I/F und Funkteilnehmern erfolgen. Dabei wird ein priorisierter Teilnehmer 1:1 einem Teilnehmerschnittstellenmodul I/F zugewiesen, was für diesen Teilnehmer eine Blockingrate gleich 0 zur Folge hat. Nicht priorisierte Teilnehmer werden zu mehreren einem Teilnehmerschnittstellenmodul I/F fest zugeordnet, was für diese Teilnehmer eine hohe Blockingrate bedeutet. Damit sind weitgehende Ähnlichkeiten zu (1), (2) und (3) gegeben, so daß bestimmte dort getroffene Feststellungen auch hier zutreffen.

Demgegenüber geht die vorliegende erfindungsgemäße Lösung davon aus, daß die PABX oder PSTN als Durchwahleinrichtung betrieben werden und eine echte Vermittlung im Funkbereich (channel random mode access) erfolgt, d.h. jeder Teilnehmer verfügt über eine eigene Rufnummer und kann zum Zwecke des kommenden oder gehenden Verkehrs auf jedes beliebige freie Schnittstellenmodul I/F, das kein Teilnehmerschnittstellenmodul ist und mit einem Funkkanal fest verbunden ist, kommandiert werden. Hierdurch wird erfindungsgemäß erreicht, daß die Anzahl der Schnittstellenmodule nicht größer als die Zahl der benötigten Funkkanäle ist und damit eine hohe Nutzungseffektivitat erreicht wird.

In (5) wird eine Lösung beschrieben, die auf dem DECT-Standard beruht und unter Verwendung eines TDM/TDMA/TDD - Verfahrens den drahtlosen Anschluß von Teilnehmern an PABX oder PSTN ermöglicht. Im System wird eine digitale Übertragung mit 32 kbit/s/Kanal benutzt, wobei jeweils 8 Kanäle mit einem RF-Träger übertragen werden, wozu insgesamt eine Bruttodatenrate von 640 kbit/s erforderlich ist.
Dieses Konzept hat zwei grundlegende Konsequenzen:
1. Ein TDMA-Rahmen mit einer Dauer von 16 ms ist in 8 Kanalrahmen für die Richtung Basisstation zu den Teilnehmergeräten und 8 Kanal rahmen für die Richtung von den Teilnehmergeräten zur Basisstation unterteilt, woraus für den einzelnen Kanal rahmen eine Dauer von 1 ms folgt.
   Damit sind keine Reserven für den Ausgleich von Laufzeitunterschieden (unterschiedliche Entfernungen von Teilnehmergeräten zur Basisstation) vorhanden und das System ist auf kürzeste Entfernungen von bis zu 300 m beschränkt.
   Zur Quantifizierung dieser Aussagen: Die Realisierung eines Versorgungsbereiches von 30 km Radius erfordert Schutzzeiten von 0,2 ms zwischen den Aussendungen zweier aufeinanderfolgend sendender Teilnehmergeräte.
2. Für die Übertragung von 8 Kanälen im Duplexbetrieb wird eine HF-Bandbreite von 1 MHz belegt, was nur bei den minimalen Reichweiten und damit verbundenen geringen Sendeleistungen von 80 mW akzeptabel ist.

Die vorliegende erfindungsgemäße Lösung geht von der Zielstellung aus, daß Versorgungsbereiche mit einem Radius von mehr als 30 km zu realisieren sind, und es mußten deshalb grundsätzlich andere Wege beschritten werden. So können in der Übertragungsrichtung von der Basisstation zu den Teilnehmergeräten auf Grund des gewählten analogen Übertragungsverfahrens bis zu 120 Kanäle mit einer HF-Bandbreite von weniger als 700 kHz übertragen werden und in der Übertragungsrichtung von den Teilnehmergeräten zur Basisstation wird durch Anwendung eines FDMA-Verfahrens das Problem der Schutzzeiten vermieden.

Eine dem Grundgedanken von (5) adäquate Zielstellung wird in (6) entwickelt, hier jedoch nicht für Portables nach DECT-Standard, sondern für schnurlose Telefone älteren Standards. Die Erfindung soll die Begrenzung des Einsatzradius von schnurlosen Telefonen auf wenige 100 Fuß um den Installationsort der stationären Funkbasis des Einzelnutzers aufheben, indem eine Vielzahl von stationären einkanaligen Funkbasen in einem Nutzungsbereich (Territorium, Gebäude) dezentral installiert und an eine PABX angeschlossen wird. Dabei erfolgt keine Veränderung (Vergrößerung) des Versorgungsbereiches der einzelnen Funkbasis. Durch ein entsprechendes Zugriffsverfahren inclusive handover kann ein schnurloses Telefon auf jede dieser Funkbasen zugreifen und erhält dadurch einen größeren territorialen Einsatzbereich. Das System kann mehrere schnurlose Telefone bedienen.
Demgegenüber besitzt die vorliegende erfindungsgemäße Lösung eine zentrale vielkanalige Basisstation für die Versorgung eines großflächigen Territoriums, wodurch ein handover für kleine Teilbereiche sich erübrigt. Neben diesen Unterschieden in der Zielstellung und Systemstruktur sind es vor allem die Steuerungsmechanismen, die unterschiedlich sind. Während in (6) der Erfindungsgehalt sich darauf konzentriert, PABX-Protokoll und Protokoll der schnurlosen Telefonsysteme zu koppeln, wird bei der vorliegenden erfindungsgemäßen Lösung für den Nutzer ein Hauptanschluß mit uneingeschränkt nutzbarer a/b-Schnittstelle realisiert.

In (7) wird wie in (5) eine Lösung beschrieben, die unter Verwendung eines TDM/TDMA/TDD - Verfahrens den drahtlosen Anschluß von Teilnehmern an PABX ermöglicht. Bei dieser speziellen Lösung wird jedem Teilnehmergerät in dem TDM-Rahmen mindestens ein Kanal fest zugeordnet. Sofern ein Gerät außerhalb des Funkversorgungsbereiches der zentralen Funkstation liegt, wird ein territorial geeignet positioniertes Teilnehmergerät zusätzlich zu seiner Grundfunktion als Repeater genutzt. Das über einen Repeater versorgte Teilnehmergerät belegt dann in dem TDM-Rahmen zwei Kanäle. Maximal können zwei Repeater in den Übertragungsweg eingeschaltet werden, in welchem Falle dann ein Teilnehmergerät drei Kanäle belegt. Ein weiteres besonderes Merkmal des dort vorgeschlagenen Verfahrens ist, daß das System sich bezüglich Verteilung der Repeaterfunktionen und Kanal verteilung selbst konfigurieren kann. Konsequenzen sind eine geringe Kanaleffizienz (Kanalverkehrswert gleich Verkehrswert des Einzelteilnehmers bzw. nur die Hälfte oder ein Drittel bei Repeaternutzung) und die Schaffung von Abhängigkeiten zwischen Teilnehmergeräten (Teilnehmer-Repeater-Geräte unterliegen besonderen Anforderungen, die dieser Teilnehmer dann zu respektieren hat)
Demgegenüber wird bei der vorliegenden Erfindung die Unabhängigkeit der Teilnehmergeräte strikt gewahrt und durch Anwendung eines Funkvermittlungsverfahrens mit channel random mode access eine hohe Kanaleffizienz erreicht (Verkehrswert im Kanal ca das 10-fache des Verkehrswertes des Einzelteilnehmers).

### KURZE BESCHREIBUNG DER ERFINDUNG

Der vorliegenden Erfindung liegt die Aufgabe zugrunde in einem analogen b.z.w. gemischt analog-digitalen Funkübertragungssystem für Telefoniesysteme mit einer ortsfesten Basisstation und einer Vielzahl voneinander unabhängiger ortsfester Teilnehmerstationen ein entsprechendes Vermittlungsprinzip und eine angepaßte Organisation/Handling im System anzuwenden. Einzelheiten der Erfindung sind anhand der in den Zeichnungen dargestellten Zusammenhänge näher beschrieben. Es zeigen:
- **Fig. 1**: Systemaufbau Drahtlose-Anschluß-Leitung
- **Fig. 2**: Systemaufbau Funktelefoniesystem mit E&M
- **Fig. 3**: Kanalcontroller für Betrieb mit E&M-Schnittstelle
- **Fig. 4**: Systemaufbau Funktelefoniesystem mit PCM - Schnittstelle
- **Fig. 5**: Datenrahmen im Organisationskanal
- **Fig. 6**: Betriebsweise des Organisationskanals
- **Fig. 7**: Standardablauf der Vermittlung im Funkbereich bei Ruf für Funkteilnehmer
- **Fig. 8**: Standardablauf der Vermittlung im Funkbereich bei Wahl wunsch eines Funkteilnehmer
- **Fig. 9**: Standardablauf für Gesprächsabbruch mit Auslösung durch die Fernmeldevermittlungseinrichtung
- **Fig. 10**: Standardablauf für Gesprächsabbruch mit Auslösung durch den Funkteilnehmer

### BESTE WEGE DER AUSFÜHRUNG DER VERBINDUNG

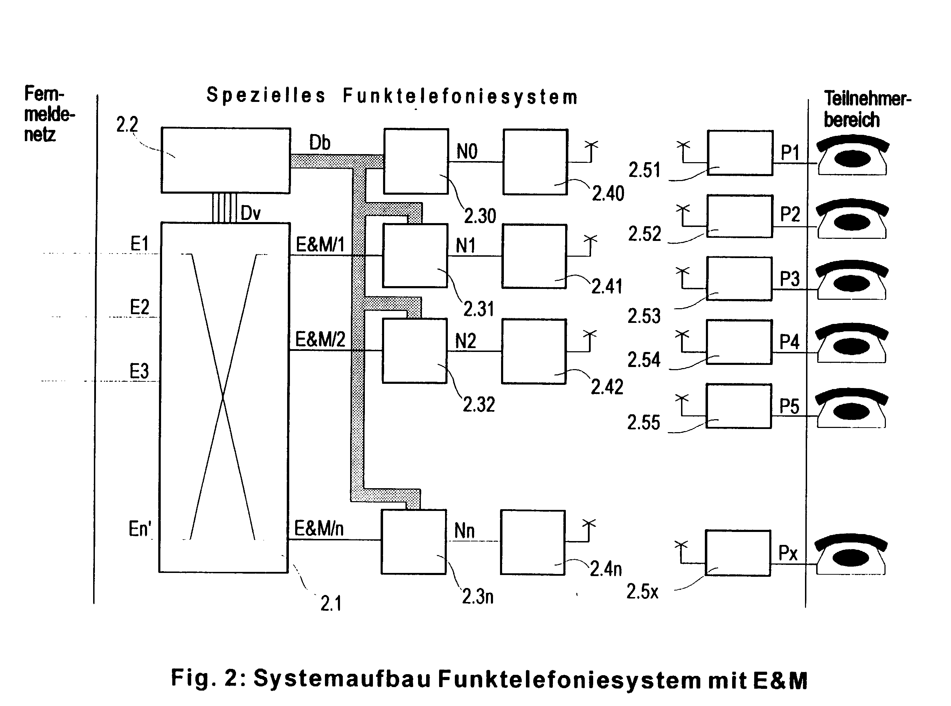

Die erfindungsgemäß vorgeschlagene Lösung, in zwei unterschiedlichen Varianten in **Fig. 2**. und **Fig. 4**. dargestellt, enthält ein Konzept der Art, daß im Fernmeldebereich keine Vermittlung auf die Teilnehmerebene erfolgt. Eine Fernmeldevermittlungseinrichtung, die Bestandteil des Systems ist, vermittelt von den Eingängen (Kanälen), über welche sie an das Fernmeldenetz oder an einen Durchwahlsatz einer Ortsvermittlungseinrichtung angeschlossen ist, direkt auf die Duplex-Funkkanäle (Nachrichtenkanäle Nl bis Nn) und erst im Funkbereich wird die Vermittlung auf die Teilnehmerebene durchgeführt. Dabei gilt für die zu vermittelnden Kanalzahlen n > n' (s. **Fig. 2**) bzw. a > a' (s **Fig. 4**), um zu gewährleisten, daß auch bei voller Ausschöpfung der durch n' bzw. a' charakterisierten Kapazität für Fernverbindungen noch eine Kapazität für systeminterne Verbindungen - Ortsgespräche - verfügbar bleibt. Sowohl n als auch (a * 30) sind kleiner als die Zahl der Funkteilnehmer.
Diese Konzeption vermeidet den Einsatz von zwei relativ großen Vermittlungseinheiten wie beim System DAL, die über die Teilnehmerebene miteinander verbunden sind. Es ist nur eine vergleichsweise kleine Vermittlungseinrichtung erforderlich.

In **Fig. 2**. ist das Grundprinzip der erfindungsgemäß vorgeschlagenen Lösung nach den Ansprüchen 1, 2, 4, 5 und folgende bei Anschaltung an E&M-Ports einer Fernmeldevermittlungseinrichtung **2.1**, die Bestandteil der Einrichtung ist, dargestellt. Diese vermittelt von den Eingängen El bis En' auf die E&M-Ports E&M/I bis E&M/n. Die E&M-Ports der Fernmeldevermittlungseinnchtung sind mit Steuer- und Schaltbaugruppen **2.31** bis **2.3n** (im nachfolgenden als Kanalcontroller bezeichnet) verbunden, die ihrerseits über einen gemeinsamen Datenbus Db mit der Funkvermittlungseinrichtung **2.2** verbunden sind. An die Kanalcontroller sind die Kanalbaugruppen **2.41** bis **2.4n** angeschlossen, die die Duplex-Funkkanäle realisieren. Die Fernmeldevermittlungseinrichtung führt eine teilnehmerinvariante kanalbezogene Vermittlung durch.

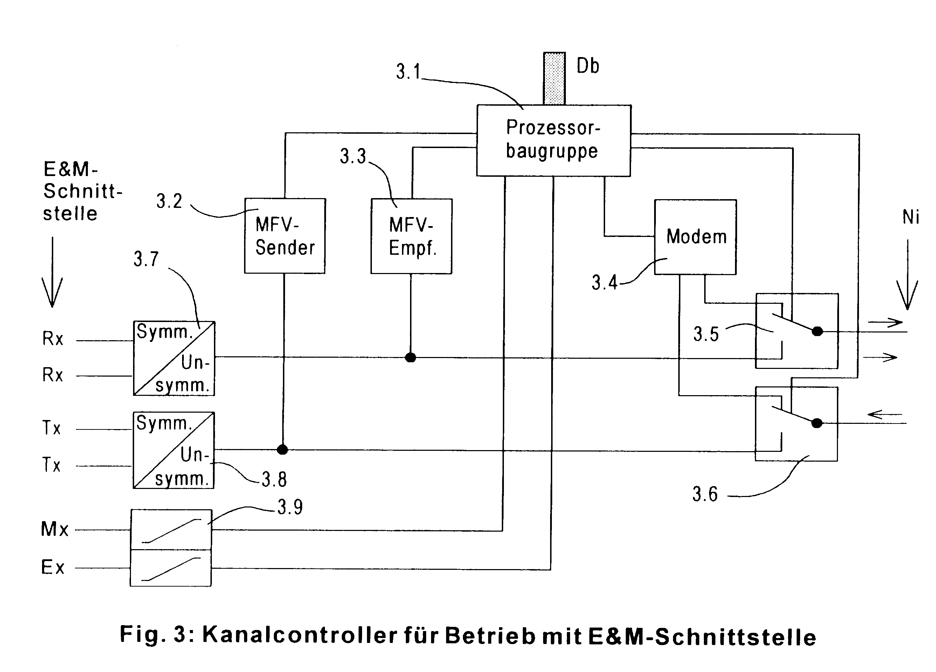

Die an die E&M-Ports der Fernmeldevermittlungseinrichtung angeschalteten Kanalcontroller mit einem Aufbau entsprechend **Fig. 3**. werden von der Funkvermittlungseinrichtung über den Datenbus Db so gesteuert, daß sie alle für den Betrieb der E&M-Schnittstelle erforderlichen Leitungs-, Belegungs- und Quittungssignale sowie Rufzeichen generieren und dadurch einen Teilnehmer simulieren. Durch die Einfügung der Kanalcontroller erfolgt die Signalisation nicht vom E&M-Port zum Nachrichtenkanal, sondern wird über den Datenbus Db zur Funkvermittlungseinrichtung umgeleitet und von dieser entsprechend speziellem Organisationskanalprotokoll in den Organisationskanal umgesetzt. Hierzu werden die zwei symmetrischen NF-Leitungspaare Rx/Rx und Tx/Tx an die Symmetriewandler **3.7** und **3.8** angeschaltet und die unsymmetrischen NF-Signalleitungen Ru und Tu über die elektronischen Umschalter **3.5** und **3.6** an den Nachrichtenkanal, jeweils Sendeund Empfangsrichtung, angeschlossen. An die Leitung Ru ist der MFV-Empfänger **3.3** angeschaltet, der ankommende Wählzeichen an die Prozessoreinheit 3 1 übergibt und an die Leitung Tu ist der MFV-Sender **3.2** angeschaltet, der von der Prozessoreinheit **3.1** ausgegebene Zeichen als MFV-Wählzeichen in Richtung zur E&M-Schnittstelle der Fernmeldevermittlungseinrichtung ausgibt An die Prozessoreinheit **3.1** ist weiterhin ein Modem **3.4** angeschlossen, dessen Sende- und Empfangsports an die Umschalter **3.5** bzw. **3.6** angeschaltet sind. Die Umschalter können von der Prozessoreinheit **3.1** unabhängig voneinander so geschaltet werden, daß das Modem sende- und/oder empfangsseitig an den Nachrichtenkanal angeschaltet wird und in diesen Fällen die Verbindung zwischen E&M-Port und Nachrichtenkanal getrennt wird.
Das Modem **3.4** (s. **Fig. 3.**) hat im System drei Aufgaben zu realisieren:
- Einspeisung bzw. Empfang von Signalisierungsinformationen in den bzw. vom Nachrichtenkanal, die zwischen Funkvermittlungsstelle und TeleLink während einer bestehenden Verbindung ausgetauscht werden.
- Empfang der Wahlzeichen, die vom Teilnehmeranschaltgerät im Nachrichtenkanal digital übertragen werden und Übergabe der Wählzeichen an die Prozessoreinheit, die diese Zeichen an den MFV-Sender **3.2** (s. **Fig. 3.**) überträgt und damit eine MFV-Wahl realisiert.
- Einspeisung bzw. Empfang von digitalen Signalen in den bzw. vom Nachrichtenkanal zum Zwecke der Übermittlung von numerischen oder alphanumerischen Nachrichten an ein Teilnehmeranschaltgerät oder eine Gruppe derartiger Geräte, die im Teilnehmeranschaltgerät gespeichert werden und deren Eingang dem Teilnehmer optisch und akustisch angezeigt wird und die von diesem auch zeitlich versetzt ausgewertet werden können, im weiteren Paging genannt, die Durchführung von Fernabfragen für Servicezwecke, im folgenden als Remote-Service bezeichnet, bei Teilnehmeranschaltgeräten und für die Nutzung des Nachrichtenkanals als zusätzlicher Organisationskanal.

Die Leitungen Mx und Ex des E&M-Ports der Fernmeldevermittlungseinrichtung sind über Pegelwandler **3.9** an die Prozessoreinheit angeschlossen, die über diesen Weg mit der Fernmeldevermittlungseinheit die Signalisation zu Belegung, Belegungserkennung, Quittung und Quittungserkennung realisiert. Die Prozessoreinheit ist über den Datenbus Db mit der Funkvermittlungseinrichtung verbunden.
Nicht dargestellt, aber Bestandteil der Erfindung ist. daß eine Prozessoreinheit gegebenenfalls mehrere Kanalcontroller realisiert.

In **Fig. 4.** ist das Grundprinzip der erfindungsgemäß vorgeschlagenen Lösung nach den Ansprüchen 1, 3, 4, 5 und folgende bei Verwendung einer digitalen Fernmeldevermittlungseinrichtung **4.1**, die Bestandteil der Einrichtung ist, dargestellt. Diese vermittelt von (a' * 30)-PCM-Eingangskanälen entsprechend Anschaltkapazität und PCM-Hierarchie auf (a * 30) Primärmultiplexanschlüsse als Teilnehmerausgänge. Sowohl (a' * 30) als auch (a * 30) sind kleiner als die Zahl der Funkteilnehmer (Teilnehmeranschaltgeräte **4.51.** bis **4.5x**), d.h. es ist x > (a * 30), (a' * 30).
Die Teilnehmerausgänge der Fernmeldevermittlungseinrichtung sind mit Steuer- und Schaltbaugruppen **4.31** bis **4.3(a * 30)** (im nachfolgenden als Kanalcontroller bezeichnet) verbunden, die ihrerseits über einen gemeinsamen Datenbus Db mit der Funkvermittlungseinrichtung **4.2** verbunden sind. An die Kanalcontroller sind die Kanalbaugruppen **4.41** bis **4.4(a * 30)** angeschlossen, die die Duplex-Funkkanäle realisieren.
Die PCM-Kanäle für Synchronisation und Signalisation, im allgemeinen die Kanäle 16 und 0 jeder PCM-30-Ausgangsgruppe, sind nicht an S_{2M}-Signalumsetzer angeschlossen, sondern direkt mit der Funkvermittlungseinheit verbunden, die mit der Fernmeldevermittlungseinrichtung über diese Verbindungen entsprechend E&M- oder S_{2M}-Protokoll kommuniziert und die die Signalisation entsprechend dem speziellen Organisationskanalprotokoll in den Organisationskanal umsetzt. Die Kanalcontroller haben bei dieser Ausführung lediglich die Aufgabe, die Teilnehmerausgänge der Fernmeldevermittlungseinrichtung zum Nachrichtenkanal durchzuschalten bzw. die Verbindung zu trennen, wenn von der Funkvermittlungseinrichtung Signalisationen in den Nachrichtenkanal eingespeist werden sollen.

Die Funkvermittlungseinrichtung kann zusätzlich über eine Datenschnittstelle Dv (s. **Fig. 2** bzw. **Fig. 4**) mit der Fernmeldevermittlungseinrichtung verbunden sein, sofern diese ebenfalls über eine geeigente Datenschnittstelle verfügt. Erlaubt diese Datenschnittstelle einen entsprechenden Zugriff zum Rechnerkern der Fernmeldevermittlung, kann die Signalisierung über diese Schnittstelle und damit unabhängig von posttypischen Schnittstellen für die Signalisation abgewickelt werden.

Gleichzeitig ist die jeweilige Funkvermittlungseinrichtung (s. **Fig. 2** bzw. **Fig. 4**) über den Datenbus Db mit einer Steuer- und Schalteinrichtung **2.30** bzw. **4.30** (im nachfolgenden als Organisationskanalcontroller bezeichnet) verbunden. an dem eine Kanalbaugruppe **2.40** bzw. **4.40** angeschlossen ist, die einen Duplex-Funkkanal realisiert, der als Organisationskanal benutzt wird.

Im Organisationskanal wird von der Funkvermittlungseinrichtung zeitmultiplex nach einem Random-Access-Verfahren und auf der Grundlage eines speziellen Organisationskanalprotokolls mit den in Betrieb befindlichen und nicht aktiven Teilnehmeranschaltgeräten **2.51** bis **2.5x** bzw. **4.51** bis **4.5x** eine ständige Kommunikation durchgeführt.
Die Teilnehmeranschaltgeräte werden ausschließlich zum Aufbau einer Fernmeldeverbindung oder zur Abwicklung komplexer Servicefunktionen in einen der Nachrichtenkanäle kommandiert. Das bedeutet, daß die Fernmeldevermittlungseinrichtung bei Ruf für einen Funkteilnehmer auf einen beliebigen freien E&M- oder PCM-Port (s. **Fig. 2** bzw. **Fig. 4**) durchschaltet und über den angeschlossenen Kanalcontroller oder die PCM-Signalisationskanäle die Signalisation und die Rufnummer des gerufenen Teilnehmers (Durchwahlstellen) zur Funkvermittlungseinrichtung übertragen werden. Von der Funkvermittlungseinrichtung können über die gleichen Wege folgende Reaktionen an die Fernmeldevermittlungseinrichtung ausgegeben werden:
- Teilnehmernummer ist nicht bekannt:
   ⇒ Verbindungsabbruch oder in einer komfortableren Variante Ausgabe des Ansagetextes "Teilnehmernummer existiert nicht" und anschließender Verbindungsabbruch.
- Teilnehmeranschaltgerät ist defekt oder abgeschaltet:
   ⇒ Ausgabe Besetztzeichen für begrenzte Zeit und Leitungsabbruch oder in einer komfortableren Variante Ausgabe des Ansagetextes "Teilnehmer ist vorübergehend nicht erreichbar" und anschließender Leitungsabbruch.
- Teilnehmeranschaltgerät ist besetzt:
   ⇒ Ausgabe Besetztzeichen für begrenzte Zeit und Leitungsabbruch oder in einer komfortableren Variante Ausgabe des Ansagetextes "Teilnehmer ist besetzt" und anschließender Leitungsabbruch.
- Teilnehmeranschaltgerät ist frei und kommandierbar:
   ⇒ Ausgabe Rufzeichen für den A-Teilnehmer.

Sofern das zu rufende Teilnehmeranschaltgerät kommandierbar ist, überträgt die Funkvermittlungseinrichtung den Ruf und die Kommandierung in den von der Fernmeldevermittlungseinrichtung vorgegebenen Nachrichtenkanal über den Organisationskanalcontroller **2.30** bzw. **4.30** und die Kanalbaugruppe **2.40** bzw. **4.40** (S. **Fig. 2.** bzw. **Fig. 4.**) an das gerufene Teilnehmeranschaltgerät **2.5i** bzw. **4.5i**, welches daraufhin in diesen Nachrichtenkanal umschaltet. Die Quittung des Teilnehmeranschaltgerätes wird nach Umschaltung in den Nachrichtenkanal in diesem übertragen und zwischen Kanalcontroller und Teilnehmeranschaltgerät bis zum Abheben durch den gerufenen Teilnehmer ein Quittungsspiel durchgeführt. Erst danach wird der Audiokanal durch den Kanalcontroller zur Kanalbaugruppe und damit zum Funkteilnehmer durch- und das Rufzeichen für den A-Teilnehmer abgeschaltet.

Zum Verbindungsaufbau auf Anforderung eines Funkteilnehmers wird der Gesprächswunsch vom Teilnehmeranschaltgerät im Organisationskanal über die Kanalbaugruppe **2.40** bzw. **4.40** und den Organisationskanalcontroller **2.30** bzw. **4.30** an die Funkvermittlungseinrichtung **2.2** bzw. **4.2** übertragen. Von der Funkvermittlungseinrichtung wird in Abhängigkeit vom den aktuellen Systembedingungen wie folgt reagiert:
- Es ist kein Nachrichtenkanal verfügbar und der Wahlwunsch besitzt kein Vorrangmerkmal:
   ⇒ Aussendung einer Wahlwunschabweisung an das Teilnehmeranschaltgerät über den Organisationskanal, das Teilnehmeranschaltgerät generiert für den Teilnehmer ein Besetztzeichen und geht wieder in den Bereitschaftszustand über.
- Es ist kein Nachrichtenkanal verfügbar und der Wahl wunsch besitzt ein Vorrangmerkmal:
   ⇒ Aussendung einer Wahlwunschquittung an das Teilnehmeranschaltgerät über den Organisationskanal, Auswahl einer bestehenden Fernsprechverbindung. vorzugsweise einer lokalen Verbindung, für die Trennung und Trennung dieser Verbindung. Nach erfolgter Trennung Verbindungsaufbau für den rufenden Teilnehmer.
- Es ist ein Nachrichtenkanal verfügbar:
   ⇒ Unabhängig vom Vorliegen eines Vorrangmerkmals wird eine Wahlwunschquittung an das Teilnehmeranschaltgerät gesendet und es erfolgt der Verbindungsaufbau für den rufenden Teilnehmer.

Sofern ein freier Nachrichtenkanal verfügbar ist, wird über den Datenbus Db (s. **Fig. 2** bzw **Fig. 4**) und den Kanalcontroller des ausgewählten Nachrichtenkanals oder über den Signalisationskanal der entsprechenden PCM-Gruppe eine Leitungsbelegung durchgeführt. Nach Vorliegen der Belegungsquittung von der Fernmeldevermittlungseinrichtung wird von der Funkvermittlungseinrichtung über den Organisationskanal das Teilnehmeranschaltgerät in den ausgewählten Nachrichtenkanal kommandiert. Das Teilnehmeranschaltgerät quittiert nach Umschaltung in den Nachrichtenkanal in demselben. Nach Durchführung des Quittungsspiels mit dem Kanalcontroller wird von diesem der Audiokanal zur Kanalbaugruppe und damit zum Funkteilnehmer durchgeschaltet, woraufhin vom Teilnehmeranschaltgerät zuerst die Übertragung seiner Teilnehmerkennung und danach die Wahlübertragung durchgeführt werden. Die Teilnehmerkennung wird von der Fernmeldevermittlungseinrichtung für die Zuordnung der Gesprächsgebühren benutzt.

Für den Verbindungsabbau sind die folgenden Betriebsweisen vorgesehen:
- Der Funkteilnehmer legt auf:
   ⇒ Das Teilnehmeranschaltgerät sendet nach Auflegen des Teilnehmers im Nachrichtenkanal eine Abbruchmeldung, schaltet auf den Organisationskanal zurück und geht in den Bereitschaftsbetrieb über. Die Abbruchmeldung wird vom Kanalcontroller empfangen, der daraufhin Verbindungsabbruch direkt über die E&M-Schnittstelle oder über Datenbus Db, Funkvermittlungseinrichtung und S_{2M}-Signalisationskanal an die Fernmeldevermittlungseinrichtung überträgt.
- Die Gegenstelle des Funkteilnehmers legt auf:
   ⇒ Von der Fernmeldevermittlungseinrichtung wird über die E&M-Schnittstelle direkt zum Kanalcontroller oder über den S_{2M}-Signalisationskanal, Funkvermittlungseinrichtung und Datenbus Db zum Kanalcontroller Verbindungsabbruch signalisiert. Vom Kanalcontroller wird im Nachrichtenkanal ein Abbruchbefehl an das Teilnehmeranschaltgerät gesendet, dieses sendet dem Teilnehmer ein kurzes Endesignal, schaltet in den Organisationskanal zurück und geht in den Bereitschaftszustand über. Vom Kanalcontroller wird der Verbindungsabbau an die Funkvermittlungseinrichtung gemeldet.
- Die Funkverbindung ist über eine Zeitschwelle hinweg unterbrochen:
   ⇒ Kanalcontroller und Teilnehmeranschaltgerät überwachen das Vorhandensein einesempfangswürdigen Signals an den jeweiligen Empfängereingängen Überschreitet die Dauer einer Unterbrechung eine eingestellte Zeitschwelle, so reagiert jede Stelle so, als hätte die Gegenstelle einen Verbindungsabbruch signalisiert. Die Funkvermittlungseinrichtung führt im Organisationskanal eine Kontrolle der Anwesenheit dieses Teilnehmeranschaltgerätes durch.

Die Funkvermittlungseinrichtung führt die teilnehmerbezogene Vermittlung durch, wozu sie
- eine Teilnehmerdatei führt, in welcher alle angemeldeten Teilnehmeranschaltgeräte mit ihrer Durchwahlnummer, ihrer Teilnehmernummer im Funkvermittlungsbetrieb, ihrer Kennummer für die Gebührenzuordnung, ihrer Sicherungsnummer und ihrer Seriennummer erfaßt sind, welche die aktuellen Betriebszustände der Teilnehmeranschaltgeräte "frei", "besetzt", oder "nicht verfügbar" und die Pegeleinstellung für den Sendebetrieb in Richtung zum Teilnehmeranschaltgerät enthält, eine Kanaldatei führt, in welcher die aktuellen Frei- bzw. Belegtzustände der Nachrichtenkanäle erfaßt sind;
- eine Vermittlungsdatei führt, in welcher alle aktuell laufenden Vermittlungsprozesse mit ihren inhaltlichen und zeitlichen Phasen erfaßt sind und die dazu dient, die Aktivitäten im Organisationskanal und die Kommunikation mit der Fernmeldevermittlungseinrichtung über Kanalcontroller oder S_{2M}-Signalisationskanal zu steuern.

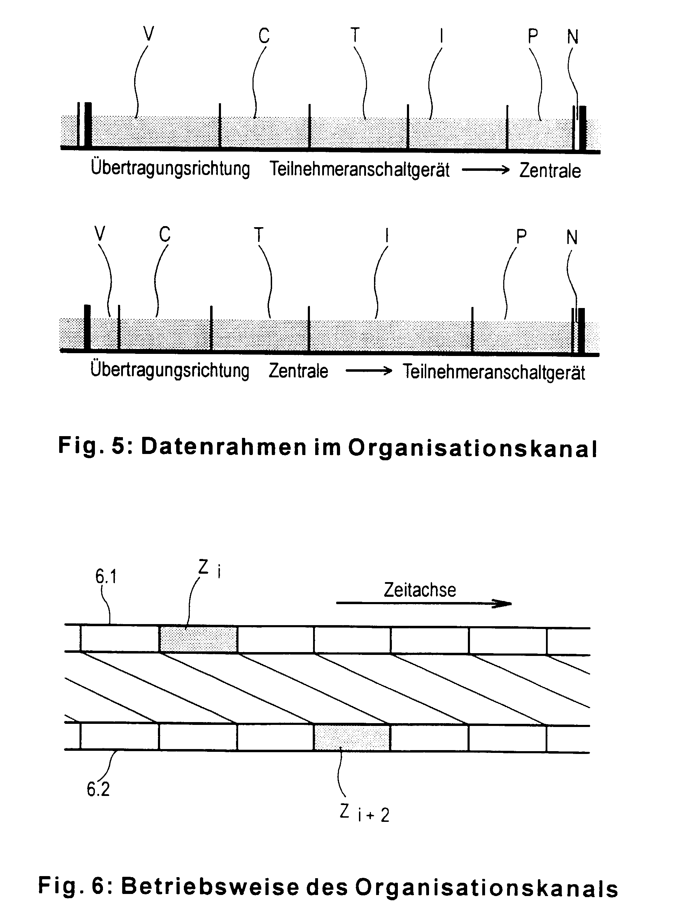

Der Organisationskanal arbeitet mit digitaler zeitmultiplexer Übertragung, wobei in Zeitschlitzen konstanter Länge mit Datenrahmen entsprechend **Fig. 5** gearbeitet wird. In einer beispielhaften Ausführung können die Elemente des Datenrahmens die in **Tabelle 1** dargestellte Bedeutung, Struktur und Werte annehmen. Die Arbeitsweise im Organisationskanal erfolgt nach dem Master-Slave-Prinzip wie in **Fig. 6** dargestellt. Dies bedeutet, daß die Teilnehmeranschaltgeräte stets nur mit einem konstanten Versatz von mindestens einer Datenrahmenlänge auf Aussendungen der Funkvermittlungseinrichtung antworten. In **Fig. 6** ist beispielhaft der Betrieb mit einem Versatz von zwei Datenrahmenlängen dargestellt Die Kommunikation mit den Teilnehmeranschaltgeräten wird von der Funkvermittlungseinrichtung nach einem Random-Access-Verfahren geführt, indem die Teilnehmeranschaltgeräte nur bei Bedarf adressiert angesprochen werden (s. **Tabelle 2**), ausgenommen die Frei rufe, die keine Adressierung enthalten und allen Teilnehmeranschaltgeräten die entsprechend versetzte Übertragung von Wahlwunschmeldungen (s. **Tabelle 4**) gestatten.

**Tabelle 1.**

| | | Aussendung von | | | | |
|---|---|---|---|---|---|---|
| Bezeichnung | | Teilnehmeranschaltgerät | | Funkfeststation | | Bemerkungen |
| | | Bit | Hex | Bit | Hex | |
| V0 | Vorläufer | 32 | | 8 | | L/0-Folge )¹ |
| C | Codeblock | 22 | | 22 | | 2 x 11-stell.Barkercode |
| T | Teiln.-nummemteil | 24 | 3 | 24 | 3 | (8,4)-codiert |
| I | Informationsteil | 24 | 3 | 40 | 5 | (8,4)-codiert |
| P | Prüfsummenteil | 16 | 2 | 24 | 3 | (8,4)-codiert |
| N | Nachläufer | 2 | | 2 | | )² |
| Z | Zeitschlitz gesamt | 120 | | 120 | | |

| | | | | | | |
|---|---|---|---|---|---|---|
| )¹ Eine drastische Verringerung der Länge des Vorläufers in der Senderichtung von der Funkfeststation zu den Teilnehmeranschaltgeräten auf wenige Bit zu Gunsten des Informationsteils und des Prüfsummenteils ist möglich, da die Funkfeststation kontinuierlich sendet und somit im Signal keine Phasensprünge auftreten. | | | | | | |
| )² In der Senderichtung von der Funkfeststation zu den Teilnehmeranschaltgeräten werden 2 Bit high gesendet, während in der Senderichtung von den Teilnehmeranschaltgeräten zur Funkfeststation keine Aussendung erfolgt, damit die durch unterschiedliche Entfernungen zur Funkfeststation bedingten Laufzeitunterschiede zweier aufeinanderfolgend sendender Teilnehmeranschaltgeräte beim Empfang in der Funkfeststation nicht zur Überlagerung der Aussendungen führen. | | | | | | |

Entsprechend **Fig. 5** bzw. **Tabelle 1** können bei T mit 3 Hexadezimalstellen bereits 4096 Rufnummern gebildet werden, während I mit 3 bzw. 5 Hexadezimalstellen die Unterteilung in eine Stelle Befehlswort und 2 bzw. 4 Stellen Datenwort erlaubt.
Werden bei T, I, und P jeweils 4 Bit Nettoinformation BCH (8,4)-kodiert übertragen, so können für 4 Bit Nettoinformation ein Bitfehler korrigiert und zwei Bitfehler erkannt werden. Da mehr als zwei Bitfehler nicht erkennbar sind, wurde zusätzlich die Prüfsumme P eingeführt, die bei den vorgenannten Werten 2 bzw. 3 Hexadezimalstellen umfaßt.

Die Übertragung von T, I und P erfolgt mittels Blockinterleaving. Für 8 * (8,4) Bit Bruttoinformation (Interleavingfaktor gleich 8) in der Senderichtung von den Teilnehmeranschaltgeräten zur Funkfeststation bzw. 11 * (8,4) Bit Bruttoinformation (Interleavingfaktor gleich 11) in der Senderichtung von der Funkfeststation zu den Teilnehmeranschaltgeräten können somit Burstfehler mit einer Länge von 8 bzw. 11 Bit korrigiert werden.

In der Senderichtung von der Funkfeststation zu den Teilnehmeranschaltgeräten stehen die in **Tabelle 2** dargestellten Befehlstypen zur Verfügung.

**Tabelle 2**

| Kürzel | Teilnehmernummernteil | | | Informationsteil | | | Bedeutung |
|---|---|---|---|---|---|---|---|
| | 1 | 2 | 3 | 1 | 2 | 3 | |
| F. . | i | i | i | B | i | i | Freirufe |
| N.. | 13H | i | i | B | i | i | bedingter Freiruf |
| K.. | t | t | t | B | k | k | Kanalzuweisungen |
| Q.. | t | t | t | B | i | i | Quittungen |
| A.. | t | t | t | B | i | i | Anwesenheitskontrolle, Abbruchbefehle |
| P.. | t | t | t | B | a | i | Paging |
| T.. | t | t | t | B | i | i | Technischer Service |

- B: Befehlausscheidungsstelle

- i ≙ 4 bit: frei verfügbar für Belegung mit Information
- t ≙ 4 bit: belegt mit Teilnehmernummer
- k ≙ 4 bit: belegt mit Kanalnummer
- a ≙ 4 bit: belegt mit Auswahlkriterium

Freirufe F.. entsprechend **Tabelle 2** werden unterschieden in
- FT: Freiruf mit Zeitinformation
Die mit "i" gekennzeichneten Hexadezimalstellen werden mit der Uhrzeitinformation belegt.
und
- FD: Freiruf mit Datumsinformation
Die erste Hexadezimalstelle des Teilnehmernummernteils wird mit "D" (13H) als Ausscheidungskriterium für Datum und die mit "i" gekennzeichneten Hexadezimalstellen werden mit der Datumsinformation belegt.

Bedingte Freirufe N.. entsprechend **Tabelle 2** sind bezüglich NT und ND identisch zu F.. aufgebaut. Die Zeit- und Datumsinformationen werden alternierend in die Aussendung dieser Befehle eingefügt.

Kanalzuweisungen K.. entsprechend **Tabelle 2** werden unterschieden in
- KK: Kanalzuweisung bei Ruf für einen Funkteilnehmer.
- KG: Kanalzuweisung bei Gesprächswunsch eines Funkteilnehmers.
- KS: Kanalzuweisung für Durchführung von Remote Service am Teilnehmeranschaltgerät, für Übertragung von mehrstelligen Paginginformationen im Nachrichtenkanal, wobei diese Kanalzuweisung entsprechend Auswahl - kriterium im Pagingbefehl auch für Gruppen von Teilnehmeranschaltgeräten gelten kann, und für die Durchführung der dynamischen Rufkennzeichenänderung (Rufkennzeichen des Teilnehmeranschaltgerätes im Funkbetrieb).

Quittungen Q.. entsprechend **Tabelle 2** werden unterschieden in
- QW: Wahlwunschquittung nach Wahlwunschübertragung bei Gesprächswunsch eines Funkteilnehmers. Für das Teilnehmeranschaltgerät bedeutet dies, daß der Wahlwunsch akzeptiert ist und auf die Kanalzuweisung zu warten ist.
- QA: Wahlwunschablehnung nach Wahlwunschübertragung bei Gesprächswunsch eines Funkteilnehmers. Für das Teilnehmeranschaltgerät bedeutet dies, daß der Wahlwunsch nicht akzeptiert ist und dem Teilnehmer ein Besetztzeichen zu generieren ist.

Anwesenheitsbefehle A.. entsprechend **Tabelle 2** werden unterschieden in
- AK: Befehl zur Kontrolle der Anwesenheit oder der Betriebsbereitschaft von Teilnehmeranschaltgeräten .
- AB: Befehl zum Abbruch einer bestehenden Gesprächsverbindung der im Nachrichtenkanal gesendet wird und das Teilnehmeranschaltgerät veranlaßt, in den Organisationskanal zurückzuschalten und dem Teilnehmer ein zeitlich begrenztes Besetztzeichen zu senden.

Pagingbefehle P.. entsprechend **Tabelle 2** werden unterschieden in
- PR: Pagingruf mit Übertragung einer einstelligen numerischen Information (Informationsteil 3. Stelle).
- PR/GK: Pagingruf mit Übertragung einer mehrstelligen alpha-numerischen Information im Gesprächskanal. Befehl ist Ankündigungskommando, im übernächsten Zeitschlitz wird die Kommandierung in einen Gesprächskanal mit KS übertragen.

Beide Befehle können entsprechend **Tabelle 3** mit Hilfe des Auswahlkriteriums a in der 2. Stelle des Informationsteiles im Datenrahmen (s. **Tabelle 2**) in Einzel- und verschiedenen Arten von Gruppenrufen unterteilt werden.

Dabei stellen a, b, c, d die Bits der 2. Stelle des Informationsteils dar. Hierbei wird d als Auswahlkriterium für die Befehle PR und PR/GK benutzt, wie in Tabelle 3 in einer beispielhaften Ausführung dargestellt. Die Stellen c, b und a werden in dieser Reihenfolge als Auswahlkriterium für die Gültigkeit der 1., 2. und 3. Stelle des Rufkennzeichens der Teilnehmeranschaltgeräte benutzt. Bei einem Rufkennzeichen im Funkbereich mit drei Hexadezimalstellen werden durch Stellenauswahl 16 Hauptgruppen mit jeweils 16 Untergruppen und wiederum jeweils 16 Mitgliedern definiert. Durch das Verfahren der Gültigkeits/Ungültigkeitsfestlegung für jede Stelle des Rufkennzeichens, in **Tabelle 3** beispielhaft festgelegt mit
c, b, a = 0-Stelle ist gültig,
= 1-Stelle ist nicht relevant
ergeben sich die in **Tabelle 3** dargestellten Rufmöglichkeiten für Einzelteilnehmer (Befehle 1. und 6.) und Gruppen (Befehle 2. bis 5. und 7. bis 10.).

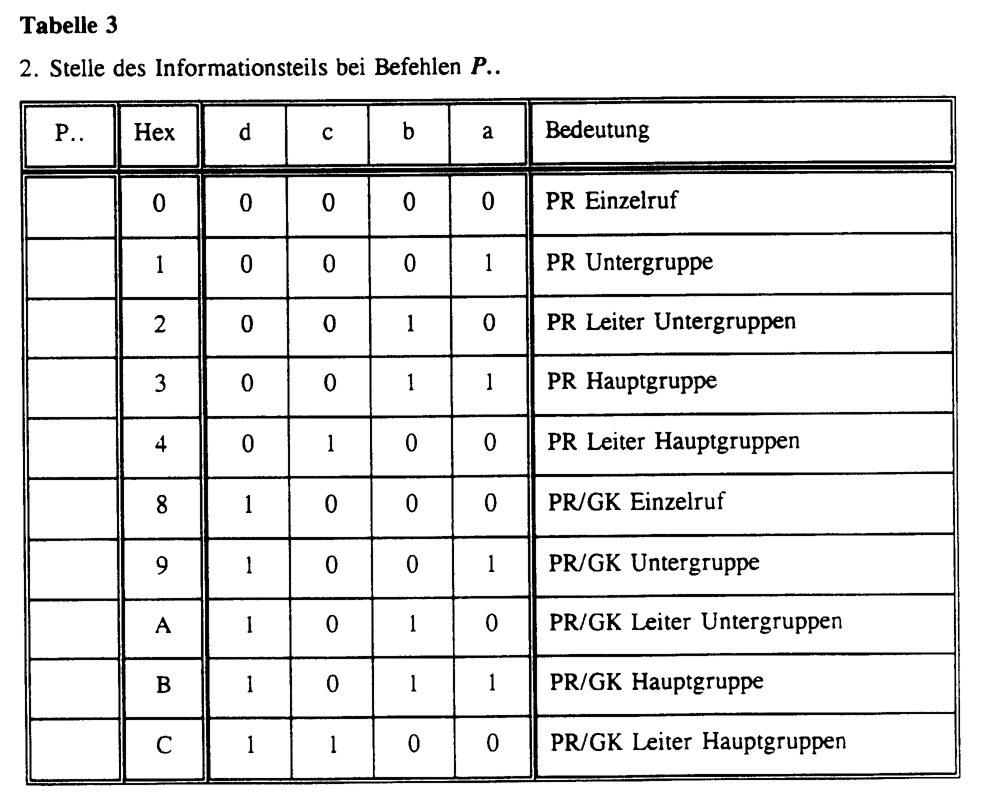

Eine erfindungsgemäße Wirkung ist, daß eine "horizontale" Gruppenauswahl der Art ermöglicht wird, daß ein Ruf für alle Mitglieder einer Hauptgruppe (Befehle 4. und 9.) oder Untergruppe einer Hauptgruppe (Befehle 2. und 7.) gesendet werden kann, und daß eine "vertikale" Gruppenauswahl der Art ermöglicht wird, daß ein Ruf für alle Leiter der Hauptgruppen (oder Stellvertreter oder andere Gleichgestellte aller Hauptgruppen) (Befehle 5. und 10.) oder alle Leiter der Untergruppen einer Hauptgruppe (oder Stellvertreter oder andere Gleichgestellte aller Untergruppen einer Hauptgruppen) (Befehle 3. und 8.) gesendet werden kann, ohne daß Abstriche am verfügbaren Zahlenbereich der Teilnehmernummern vorgenommen werden müssen.

Eine zweite erfindungsgemäße Wirkung ist, daß mit Kenntnis einer einzigen Rufnummer aus dem Kreis der zur Gruppe gehörigen Teilnehmer und dem Zusatz des Gruppenkriteriums der Gruppenruf ausgelöst werden kann.

Die erfindungsgemäße Wirkung soll an zwei Beispielen erläutert werden:
1. Es wird der Teilnehmer mit der Rufnummer 768 (dezimal) und Gruppenruf für Leiter Hauptgruppen mit einstelliger Paginginformation gewählt. Die Funkvermittlungseinrichtung überträgt im Organisationskanal den Pagingbefehl mit dem Rufkennzeichen 300 (Hexadezimal) und den Pagingbefehlsteil 4. (s. **Tabelle 3**). Die Teilnehmeranschaltgeräte ignorieren daraufhin die 1. Stelle des Rufkennzeichens, womit alle Geräte mit der Rufnummer ..00 adressiert sind.
2. Es wird der Teilnehmer mit der Rufnummer 1202 (dezimal) und Gruppenruf für Leiter Untergruppen mit mehrstelliger Paginginformation gewählt. Die Funkvermittlungseinrichtung überträgt im Organisationskanal den Pagingbefehl mit dem Rufkennzeichen 4B2 (Hexadezimal) und den Pagingbefehlsteil 8. (s. **Tabelle 3**). Die Teilnehmeranschaltgeräte ignorieren daraufhin die 2. Stelle des Rufkennzeichens, womit alle Geräte mit der Rufnummer 4..2 adressiert sind (Nummer 2 aller Untergruppen der 4. Hauptgruppe).

Technischer Service T.. entsprechend **Tabelle 2** wird unterschieden in:
1. Befehle zur Einstellung von Geräteparametern des Teilnehmeranschaltgerätes wie z.B. Sendeleistung oder Deemphasis des Empfängers oder andere, wo der Einstellwert oder die Schrittrichtung für Veränderung um eine Stufe im Information steil des Befehles im Organisationskanal übertragen wird und das Teilnehmeranschaltgerät den Befehl durch Wiederholung oder Übermittlung abgefragter Werte im Organisationskanal quittiert.
2. Befehl zur Umschaltung des Teilnehmeranschaltgerätes in einen Nachrichtenkanal zum Zwecke des Services mit der Wirkung, daß das Teilnehmeranschaltgerät für die Nutzung durch den Teilnehmer gesperrt wird und nach Umschaltung in den Nachrichtenkanal zwischen der Funkvermittlungseinrichtung und dem Linkcontroller eine nicht an das Protokoll des Organisationskanals gebundene Kommunikation (z. B. zur dynamischen Rufkennzeichenänderung des Teilnehmeranschaltgerätes, zur Übertragung der Gebührenimpulse des letzten Gespräches und Gesamtsumme der Gebührenimpulse, zur Initialisierung des Teilnehmeranschaltgerätes bei Inbetriebnahme, zum Gerätetest und zur Aktualisierung der Software des Teilnehmeranschaltgerätes) stattfindet.

In der Senderichtung von den Teilnehmeranschaltgeräten zur Funkfeststation stehen die in **Tabelle 4** dargestellten Befehlstypen zur Verfügung.

**Tabelle 4**

| Kürzel | Teilnehmernummernteil | | | Informationsteil | | | Bedeutung |
|---|---|---|---|---|---|---|---|
| | 1 | 2 | 3 | 1 | 2 | 3 | |
| W.. | t | t | t | B | p | p | Wahlwünsche |
| A.. | t | t | t | B | p | p | An-/Abmeldungen |
| P.. | t | t | t | B | i | i | Quittung Paging (bei Einzelruf) |
| T.. | t | t | t | B | i | i | Quittung technischer Service |

- B: Befehlausscheidungsstelle

- ≙ 4 bit: frei verfügbar für Belegung mit Information
- t ≙ 4 bit: belegt mit Teilnehmernummer
- p ≙ 4 bit: belegt mit Teilnehmeridentifikationsnummer

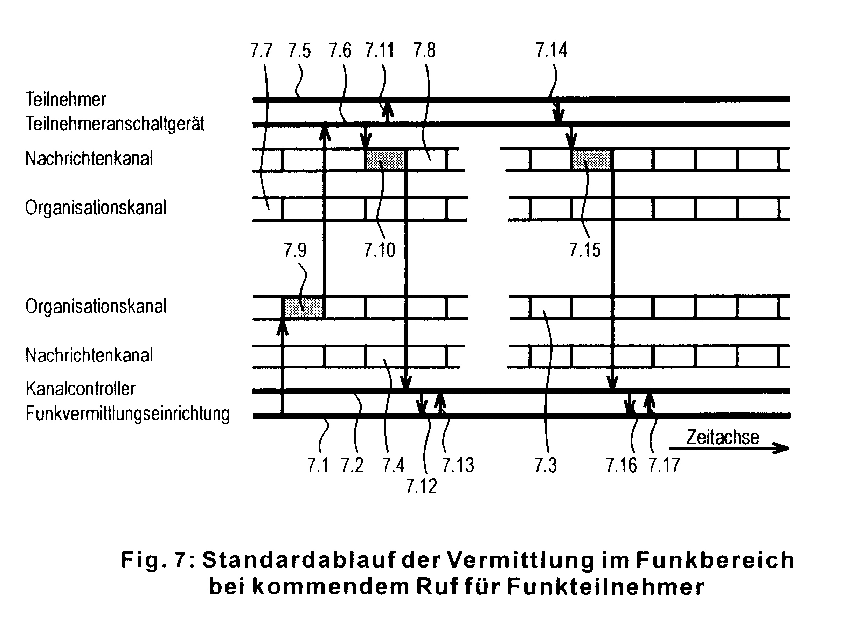

Das Organisationskanalprotokoll steuert die Vermittlungsprozesse im Funkbereich und ist für die Grundfunktionen in
- **Fig. 7**: Ruf für Funkteilnehmer,

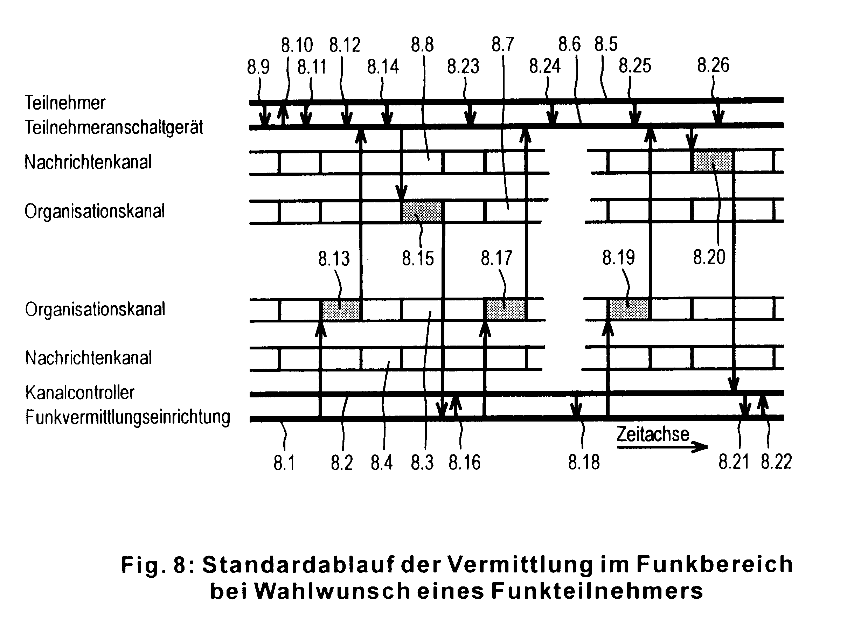

- **Fig. 8**: Wahlwunsch eines Funkteilnehmers,

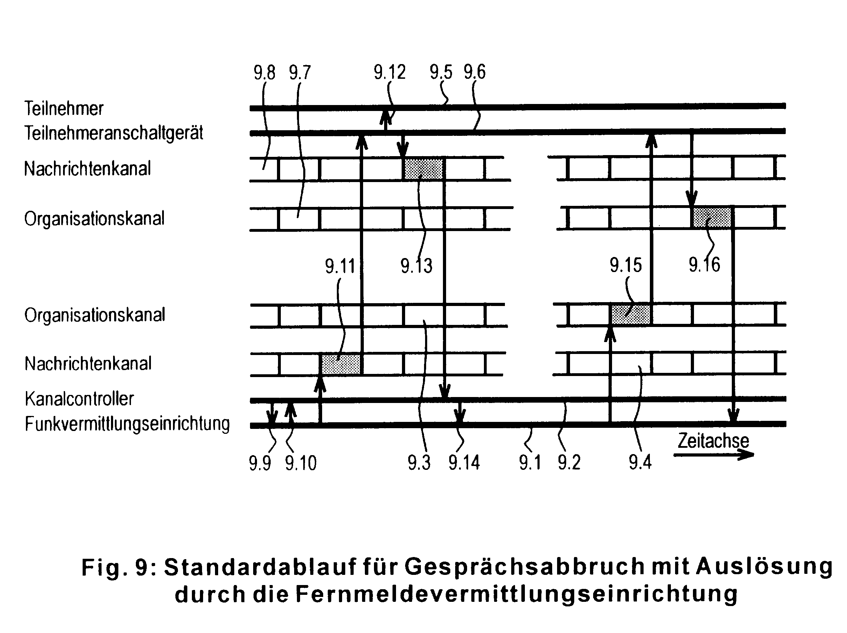

- **Fig. 9**: Gesprächsabbruch mit Auslösung durch die Fernmeldevermittlungseinrichtung und

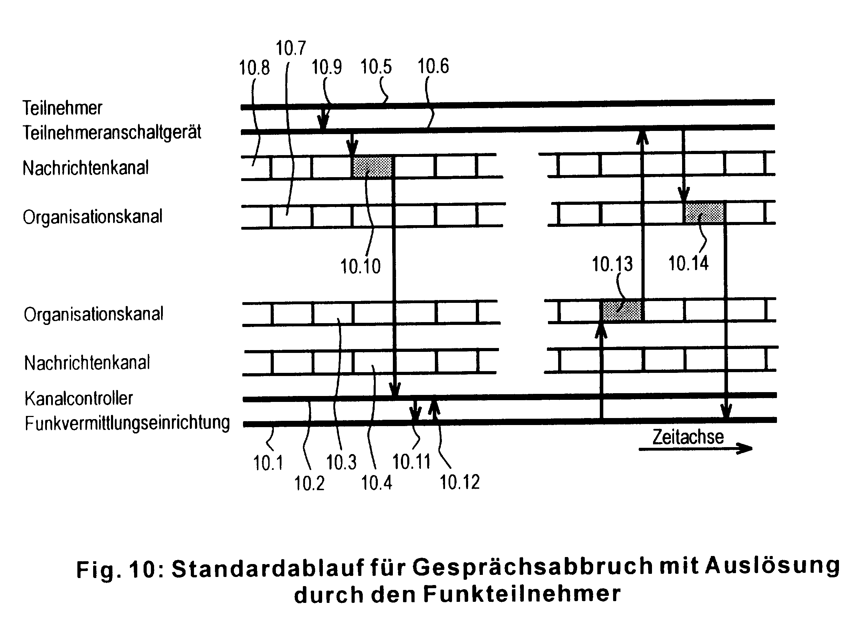

- **Fig. 10**: Gesprächsabbruch mit Auslösung durch den Funkteilnehmer dargestellt.

In allen Darstellungen ist in der vertikalen Richtung die Signalübertragung zwischen
- x.1 -: Funkvermittlungseinrichtung/Organisationskanalcontroller,
- x.2 -: Kanalcontroller des verwendeten Nachrichtenkanals,
- x.3 -: Organisationskanal in der Senderichtung von der Funkvermittlungseinrichtung zum Teilnehmeranschaltgerät,
- x.4 -: verwendeter Nachrichtenkanal in der Senderichtung von der Funkvermittlungseinrichtung zum Teilnehmeranschaltgerät,
- x.5 -: Teilnehmer/Teilnehmerendgerät,
- x.6 -: Teilnehmeranschaltgerät/Linkcontroller,
- x.7 -: Organisationskanal in der Senderichtung vom Teilnehmeranschaltgerät zur Funkvermittlungseinrichtung
- x.8 -: verwendeter Nachrichtenkanal in der Senderichtung vom Teilnehmeranschaltgerät zur Funkvermittlungseinrichtung, und in der horizontalen Richtung der zeitliche Ablauf der Protokollabwicklung enthalten.

Bei Ruf für einen Funkteilnehmer entsprechend Darstellung in **Fig. 7** wird nach Erkennen der Leitungsbelegung durch die Fernmeldevermittlungseinrichtung und Quittierung der Leitungsbelegung durch den Kanalcontroller **7.2** durch diesen die Durchwahlnummer des gerufenen Teilnehmers empfangen (diese Prozesse sind im Bild nicht dargestellt) und Leitungsbelegung und Teilnehmernummer mit der Meldung **7.9** an die Funkvermittlungseinrichtung **7.1** übertragen, die nach positiver Prüfung an den Kanalcontroller eine Quittung und Zeichengabevorschrift **7.10** (in diesem Falle Freizeichen für den A-Teilnehmer) und im Organisationskanal **7.3** eine Kanalkommandierung für kommendes Gespräch **7.11** an das Teilnehmeranschaltgerät **7.6** überträgt. Das Teilnehmeranschaltgerät schaltet daraufhin in den angewiesenen Nachrichtenkanal **7.8**, überträgt in diesem seine Anmeldung **7.12** und generiert für den Teilnehmer **7.5** das Rufzeichen **7.13**. Vom Kanalcontroller **7.2** wird die empfangene Anmeldung des Teilnehmeranschaltgerätes an die Funkvermittlungseinrichtung mit der Meldung **7.14** übertragen. Diese prüft Teilnehmerkennzeichen und Teilnehmeridentifikationsnummer und überträgt bei Akzeptanz eine positive Quittung **7.15** an den Kanalcontroller. Ab diesem Zeitpunkt wird zwischen Kanalcontroller und Teilnehmeranschaltgerät ein dummy-run-Signalspiel bis zum Abheben durch den Teilnehmer durchgeführt, das im Bild nicht dargestellt ist. Nach Schließen der Leitungsschleife **7.16** (Abheben durch den Teilnehmer) wird vom Teilnehmeranschaltgerät im Nachrichtenkanal die "Anmeldung Teilnehmer" **7.17** übertragen, woraufhin der Kanalcontroller das Freizeichen für den A-Teilnehmer abschaltet, die NF-Verbindung von der Fernmeldevermittlungseinrichtung zum Nachrichtenkanal durchschaltet und an die Funkvermittlungseinrichtung eine Meldung über die Herstellung der Verbindung **7.18** überträgt, die mit einer Meldung **7.19** von der Funkvermittlungseinrichtung quittiert wird.

Bei Wahlwunsch eines Funkteilnehmers entsprechend Darstellung in **Fig. 8** wird nach Schließen der Leitungsschleife **8.9** (Abheben durch den Teilnehmer **8.5**) vom Teilnehmeranschaltgerät **8.6** das Wählzeichen für den Teilnehmer generiert, der daraufhin mit der Wahl beginnt. Die Wahlinformationen **8.11, 8.12** und **8.14** werden im Teilnehmeranschaltgerät gespeichert und auf Vorliegen eines Vorrangmerkmals geprüft. Gleichzeitig wird vom Teilnehmeranschaltgerät geprüft, ob von der Funkvermittlungseinrichtung **8.1** im Organisationskanal **8.3** ein Freiruf oder anderer Befehl **8.13** gesendet wurde oder wird, der die Anmeldung von Wahlwunsch gestattet, worauf nachfolgend die Übertragung des Wahlwunsches **8.15** im Organisationskanal **8.7** erfolgt. Bei Wahlwunsch mit Vorrangmerkmal darf dieser auch dann übertragen werden, wenn **8.13** ein bedingter Freiruf war. Nach Empfang des Wahlwunsches wählt die Funkvermittlungseinrichtung einen Nachrichtenkanal **8.4** aus und sendet an den Kanalcontroller **8.2** dieses Nachrichtenkanals eine Meldung **8.16,** an der Schnittstelle zur Fernmeldevermittlungseinrichtung eine Leitungsbelegung durchzuführen. Desweiteren sendet die Funkvermittlungseinrichtung im Organisationskanal eine Wahlwunschquittung **8.17** an das Teilnehmeranschaltgerät. Nach erfolgreicher Leitungsbelegung überträgt der Kanalcontroller eine entsprechende Meldung **8.18** an die Funkvermittlungseinrichtung. die daraufhin eine Kanalkommandierung **8.19** an das Teilnehmeranschaltgerät im Organisationskanal **8.3** überträgt. Nach Empfang der Kanalkommandierung schaltet das Teilnehmeranschaltgerät in den zugewiesenen Nachrichtenkanal **8.8** um und sendet in diesem eine Anmeldung **8.20,** wonach der Kanalkontroller den Fernsprechweg zum Nachrichtenkanal durchschaltet. Die Schaltung der Fernmeldeverbindung und die Teilnehmerdaten werden vom Kanalcontroller der Funkvermittlungseinrichtung mit **8.21** gemeldet und von dieser mit **8.22** bestätigt. Jeweils bei Empfang der Meldungen **8.15** und **8.21** werden von der Funkvermittlungseinrichtung Rufkennzeichen und Teilnehmeridentifikationsnummer geprüft und nur bei Akzeptanz die entsprechenden positiven Quittungen **8.16, 8.17** und **8.22** gegeben.
Nach Aussendung der Anmeldung **8.20** beginnt das Teilnehmeranschaltgerät mit der Übertragung der bis dahin vom Teilnehmer in den Zwischenspeicher eingegebenen Wahlinformationen **8.23, 8.24** ff. Nach Übertragung dieser Wahlzeichen wird vom Teilnehmeranschaltgerät der Fernmeldeweg zum Teilnehmerendgerät durchgeschaltet, so daß weitere Wahleingaben des Teilnehmers direkt übertragen werden.

Bei Gesprächsabbruch mit Auslösung durch die Fernmeldevermittlungseinrichtung entsprechend Darstellung in **Fig. 9** wird nach dem Verbindungsabbau, der mit Meldung und Quittung zwischen Fernmeldevermittlungseinrichtung und Kanalcontroller **9.2** abläuft und im Bild nicht dargestellt ist, durch den Kanalcontroller eine Meldung **9.9** an die Funkvermittlungseinrichtung **9.1** übertragen, die diese mit **9.10** quittiert. Weiterhin überträgt der Kanalcontroller im Nachrichtenkanal **9.4** eine Abbruchmeldung **9.11** an das Teilnehmeranschaltgerät **9.6**. Dieses generiert für den Teilnehmer ein Endekennzeichen **9.12** und trennt danach die Leitungsschleife zum Teilnehmerendgerät. Desweiteren sendet das Teilnehmeranschaltgerät im Nachrichtenkanal **9.8** eine Abmeldung **9.13**, schaltet in den Organisationskanal **9.7** zurück und geht in den stand-by-Betrieb über. Nach Empfang der Abmeldung **9.13** des Teilnehmeranschaltgerätes wird vom Kanalcontroller **9.2** eine Meldung **9.14** über den Abbruch der Verbindung im Funkbereich an die Funkvermittlungseinrichtung übertragen. Mit einem zeitlich nicht determinierten Abstand sendet die Funkvermittlungseinrichtung **9.1** im Organisationskanal **9.3** eine Anwesenheitskontrolle **9.15**, die vom Teilnehmeranschaltgerät im Organisationskanal **9.7** mit einer Anwesenheitsmeldung **9.16** quittiert wird.

Bei Gesprächsabbruch mit Auslösung durch den Funkteilnehmer entsprechend Darstellung in **Fig. 10** wird nach Unterbrechung der Leitungsschleife **10.9** (Auflegen des Teilnehmers) vom Teilnehmeranschaltgerät **10.6** im Nachrichtenkanal **10.8** eine Abbruchmeldung **10.10** übertragen. Das Teilnehmeranschaltgerät schaltet danach in den Organisationskanal um und geht in den stand-by-Betrieb über. Der Kanalcontroller **10.2** führt nach Empfang der Abbruch meldung an der Schnittstelle zur Fernmeldevermittlungseinrichtung den Verbindungsabbau durch (im Bild nicht dargestellt) und überträgt an die Funkvermittlungseinrichtung **10.1** eine Abbruchinformation **10.11**, die von der Funkvermittlungseinrichtung mit **10.12** quittiert wird. Mit einem zeitlich nicht determinierten Abstand sendet die Funkvermittlungseinrichtung **10.1** im Organisationskanal **10.3** eine Anwesenheitskontrolle **10.13**, die vom Teilnehmeranschaltgerät im Organisationskanal **10.7** mit einer Anwesenheitsmeldung **10.14** quittiert wird.
(1) Mandel, Günter; Kercher, Klaus: DAL in analog-zellularer Technik Nachrichtentechnik, Elektronik, Berlin 42 (1992) 4
(2) Leipold, Peter: DAL - Funktechnik im Teilnehmeranschlußbereich NTZ 45 (1992) 4
(3) EP 0 311 966 A2, A3
(4) DE 41 28 811 A1
(5) Buckingham, Colin; Wolterink, Gé Klein; Akerberg, Dag: A Bussiness Cordless PABX Telephone System on 800 MHz Based on the DECT Technology IEEE Communications Magazine, January 1991
(6) GB 2 247 811 A
(7) EP 0 497 490 A2

### GEWERBLICHE AUSWERTBARKEIT

Die Erfindung ist in der Telekommunikation gewerblich auswertbar.

## Patentansprüche

1. Lokales Vermittlungs- und Übertragungssystem, welches als eine lokale Funkzelle, bestehend aus einer zentralen Funkfeststation und einer Vielzahl von dezentralen Teilnehrneranschaltgeräten, organisiert und als Ortsvermittlungsstelle oder Nebenstelleneinrichtung an das öffentliche Fernmeldenetz angeschlossen ist und den Teilnehmern, die aus unterschiedlichsten Gründen nicht über Teilnehmerleitungen an eine Vermittlungseinrichtung angeschlossen werden können oder deren Anschluß in dieser Form nicht zweckmäßig ist, den Zugang zum öffentlichen Fernmeldenetz durch Einsatz drahtloser Übertragung ermöglicht und bei welchem für den Betrieb des Systems bei einer Teilnehmerzahl größer als die Zahl der genutzten Duplex-Funkkanäle (1.40...; 2.40... ; 4.40...) (im weiteren als Nachrichtenkanäle bezeichnet) in der zentralen Funkfeststation eine Funkvermittlungseinrichtung (2.2; 4.2), die mindestens einen Duplex-Nachrichtenkanal als Standard-Organisationskanal (2.40; 4.40) für Signalisierung, Vermittlung, Verwaltung, Service und Sonderfunktionen im Funkbetrieb zwischen der Funkfeststation und den Teilnehmeranschaltgeräten (2.51...; 4.51...) benutzt, der von allen in Betrieb befindlichen, aber nicht aktiven Teilnehmeranschaltgeräten (2.51...; 4.51...) ständig empfangen und sendeseitig zeitmultiplex genutzt wird und eine Fernmeldevermittlungseinrichtung (2.1; 4.1), bei welcher an jeweils einen Port ein Nachrichtenkanal (2.40...; 4.40...) angeschlossen ist und welche die kanalbezogene Vermittlung durchführt, vorhanden sind, wobei die Funkvermittlungseinrichtung (2.2; 4.2) über einen Datenbus (Db) mit Steuer- und Schalteinrichtungen (2.31...2.3n; 4.31...4.3n) (im weiteren als Kanalcontroller (2.31...2.3n; 4.31...4.3n) bezeichnet) verbunden ist, die zwischen den Ports (E&M/1...E&M/n) der Fernmeldevermittlungseinrichtung (2.1; 4.1) und den Nachrichtenkanälen (2.40...; 4.40...) angeordnet sind, und wobei der Kanalcontroller (2.31...2.3n; 4.31...4.3n) den Teilnehmeranschluß beim Aufbau von Fernmeldeverbindungen simuliert, bis über den Weg der Funkvermittlung die direkte Durchschaltung zum Teilnehmeranschaltgerät (2.51...; 4.51...) vorgenommen ist, **dadurch gekennzeichnet**, daß der Aufbau der Funkverbindung während des Wahlvorganges des Teilnehmers erfolgt, daß die Wahlziffern über den zugewiesenen Gesprächskanal übertragen werden, und daß der Teilnehmer nach durchgeführter Wahl direkt an das Netz geschaltet ist und somit für den Teilnehmer keine Abweichung vom verkabelten a/b-Hauptanschluß feststellbar ist.

2. Lokales Vermittlungs- und Übertragungssystem nach Anspruch 1, dadurch gekennzeichnet, daß die Kanalcontroller (2.31...2.3n; 4.31...4.3n) an die E&M-Ports (E&M/1...E&M/n) der Fernmeldevermittlungseinrichtung (2.1; 4.1) angeschlossen sind und die Funkvermittlungseinrichtung (2.2; 4.2) über die Kanalcontroller (2.31...2.3n; 4.31...4.3n) den Signalaustausch mit der Fernmeldevermittlungseinrichtung (2.1; 4.1) durchführt.

3. Lokales Vermittlungs- und Übertragungssystem nach Anspruch 1, dadurch gekennzeichnet, daß bei digitalen Fernmeldevermittlungseinrichtungen die Kanalcontroller (2.31...2.3n; 4.31...4.3n) an die Teilnehmerports (E&M/1...E&M/n) des PCM-Primärmuliplexer angeschlossen sind und die für Signalisation und Synchronisation verwendeten PCM-Kanäle an die Funkvermittlungseinrichtung (2.2; 4.2) angeschlossen sind und die Funkvermittlungseinrichtung (2.2; 4.2) über den PCM-Signalisationskanal die Signalisation entweder nach E&M- oder nach S_{2M}-Protokoll mit der Fernmeldevermittlungseinrichtung (2.1; 4.1) durchführt.

4. Lokales Vermittlungs- und Übertragungssystem nach Anspruch 1, dadurch gekennzeichnet, daß bei digitalen Fernmeldevermittlungseinrichtungen (4.1) diese und die Funkvermittlungseinrichtung (4.2) über eine spezielle Datenschnittstelle (Dv) verbunden sind, über welche die gesamte Signalisierung unabhängig von posttypischen Schnittstellen abgewickelt wird.

5. Lokales Vermittlungs- und Übertragungssystem nach Anspruch 1, 2, 3 und 4, dadurch gekennzeichnet, daß von der Funkvermittlungseinrichtung (2.2; 4.2) zusätzlich zum Standard-Organisationskanal (2.40; 4.40) weitere Nachrichtenkanäle (2.41...; 4.41...), die für Wählverbindungen bestimmt sind, zeitweilig als Organisationskanäle benutzt werden können, und diese Nachrichtenkanäle (2.41...; 4.41...) der Fernmeldevermittlungseinrichtung (2.1; 4.1) über den Kanalcontroller (2.31...2.3n; 4.31...4.3n) des betreffenden Nachrichtenkanals, über den PCM-Signalisationskanal oder eine spezielle Datenschnittstelle als belegt meldet, so daß diese Nachrichtenkanäle nicht mehr mit Wählverbindungen belegt werden können.

6. Lokales Vermittlungs- und Übertragungssystem nach Anspruch 1, dadurch gekennzeichnet, daß die Funkvermittlungseinrichtung (2.2; 4.2) über mindestens eine Steuerbaugruppe (im nachfolgenden als Organisationskanalcontoller - OKC - bezeichnet) verfügt, die über den/die Organisationskanal (2.40; 4.40)/-kanäle unter Nutzung eines speziellen Organisationskanalprotokolls mit den Teilnehmeranschaltgeräten (2.51...; 4.51...) kommuniziert und daß die Funkvermittlungseinrichtung (2.2; 4.2) den Kanalcontroller (2.31...2.3n; 4.31...4.3n) jedes zur zeitweiligen Nutzung als Organisationskanal bestimmten Nachrichtenkanals über den Datenbus (Db), über welchen alle Kanalcontroller (2.31...2.3n; 4.31...4.3n) mit der Funkvermittlungseinrichtung (2.2; 4.2) verbunden sind, als OKC betreiben kann.

7. Lokales Vermittlungs- und Übertragungssystem nach Anspruch 1 und 6, dadurch gekennzeichnet, daß jedes Teilnehmeranschaltgerät (2.51...; 4.51...) über eine Steuerbaugruppe (im nachfolgenden als Linkcontroller - LC - bezeichnet) verfügt, die über den/die Organgisationskanal/-kanäle unter Nutzung des speziellen Organisationskanalprotokolls mit der Funkvermittlungseinrichtung (2.2; 4.2) kommuniziert und welche eine Telefonadapterbaugruppe steuert, die an den Nachrichtenkanal angeschlossen ist und die für den Anschluß von Teilnehmerendgeräten eine a/b-Schnittstelle realisiert.

8. Lokales Vermittlungs- und Übertragungssystem nach Anspruch 1, dadurch gekennzeichnet, daß in dem in beiden Betriebsrichtungen identisch aufgebauten und synchronen Organisationskanal (2.40; 4.40) mit digitaler zeitmultiplexer Übertragung ohne Hauptrahmenstruktur gearbeitet wird und in aufeinander folgenden Zeitschlitzen (Z) konstanter Länge Datenrahmen übertragen werden, die jeweils eine Anweisung enthalten und die aus Vorläufer (VO), Codeblock (C), Teilnehmemummemteil (T), Informationsteil (I), Prüfsummenteil (P) und Nachläufer (NA) bestehen (Tabelle 1).

9. Lokales Vermittlungs- und Übertragungssystem nach Anspruch 1 und 8, dadurch gekennzeichnet, daß in einer anderen Variante der Datenrahmen in den beiden Übertragungsrichtung nicht identisch aufgebaut ist, indem in der Senderichtung von der Funkfeststation zu den Teilnehmeranschaltgeräten (2.51...; 4.51...) die Länge des Vorläufers (VO) zu Gunsten von Informationsteil (I) und Prüfsummenteil (P) minimiert wird.

10. Lokales Vermittlungs- und Übertragungssystem nach Anspruch 1, 6, 7 und 8, dadurch gekennzeichnet, daß der Codeblock (C) aus der mindestens zweifachen Wiederholung eines vielstelligen Barkercode besteht und die Empfangsteile in den OKC der Funkvermittlungseinrichtung (2.2; 4.2) und den LC in den Teilnehmeranschaltgeräten (2.51...; 4.51...) über eine Zeitbasis hinreichender Genauigkeit verfügen, um bei Empfang nur eines Codewortes entscheiden zu können, um die wievielte Aussendung des Codewortes es sich handelt, so daß auch bei Störungen, die zum Verlust eines ganzen Codewortes führen, die Rahmensynchronisation gewährleistet werden kann.

11. Lokales Vermittlungs- und Übertragungssystem nach Anspruch 1 und 8, dadurch gekennzeichnet, daß die im Teilnehmernummernteil (T) benutzte Nummer nicht mit der Rufnummer des Teilnehmers identisch sein muß, und hierzu in der Funkvermittlungseinrichtung (2.2; 4.2) an Hand einer Schlüsseltabelle bei allen Vorgängen die den beiden Betriebsrichtungen entsprechende Umschlüsselung vorgenommen wird.

12. Lokales Vermittlungs- und Übertragungssystem nach Anspruch 1, 8 und 11, dadurch gekennzeichnet, daß die Schlüsseltabelle in der Funkvermittlungseinrichtung (2.2; 4.2) einer ständigen dynamischen Änderung unterzogen wird und die Teilnehmeranschaltgeräte (2.51...; 4.51...) mittels im Organisationskanal (2.40; 4.40) übertragener Servicebefehle auf ihre jeweils aktuelle Nummer eingestellt werden und dadurch die Teilnehmer im Funkbetrieb mit stochastisch wechselnden Nummern erscheinen.

13. Lokales Vermittlungs- und Übertragungssystem nach Anspruch 1 und 8, dadurch gekennzeichnet, daß der Informationsteil (I) aus einem einstelligen hexadezimalen Befehlswort und einem mehrstelligen zum Befehlswort gehörenden Datenteil besteht.

14. Lokales Vermittlungs- und Übertragungssystem nach Anspruch 1 und 8, dadurch gekennzeichnet, daß der Prüfsummenteil eine Prüfsumme über die Nettoinformationen von Teilnehmernummernteil und Informationsteil (I) beinhaltet.

15. Lokales Vermittlungs- und Übertragungssystem nach Anspruch 1 und 8, dadurch gekennzeichnet, daß der Nachläufer (N) in der Senderichtung von der Funkfeststation zu den Teilnehmeranschaltgeräten (2.51...; 4.51...) aus der Aussendung eines oder mehrerer Bit gleichen Logikpegels besteht und in der Senderichtung von den Teilnehmeranschaltgeräten (2.51...; 4.51...) zur Funkfeststation keine Aussendung erfolgt, und die Dauer des Nachläufers (N) so bemessen ist, daß die durch unterschiedliche Entfernung zur Funkfeststation bedingten Laufzeitunterschiede zweier aufeinanderfolgend sendender Teilnehmeranschaltgeräte (2.51...; 4.51...) beim Empfang in der Funkfeststation nicht zur Überlagerung der Signale führen.

16. Lokales Vermittlungs- und Übertragungssystem nach Anspruch 1 und 8, dadurch gekennzeichnet, daß die Informationen von Teilnehmernummernteil, Informationsteil und Prüfsummenteil BCH-codiert und anschließend unter Anwendung von Blockinterleaving übertragen werden, so daß aufeinanderfolgende Bitfehler bis zu einer maximalen Anzahl von "korrigierbare Bitfehler pro Codewort" * "Interleaving-Faktor" nicht zu Datenverlusten führen.

17. Lokales Vermittlungs- und Übertragungssystem nach Anspruch 1, 6 und 7, dadurch gekennzeichnet, daß im Organisationskanal (2.40; 4.40) in beiden Betriebsrichtungen Antworten und Quittungen zu Aussendungen der Gegenstelle mit einer konstanten Differenz von mindestens einer Datenrahmenlänge erfolgen.

18. Lokales Vermittlungs- und Übertragungssystem nach Anspruch 1, 6 und 7, dadurch gekennzeichnet, daß der Datenaustausch im Organisationskanal (2.40; 4.40) nach dem Master-Slave-Verfahren erfolgt, wobei die Funkvermittlungsstelle als Master fungiert und die Teilnehmeranschaltgeräte (2.51...; 4.51...) nur dann reagieren, wenn sie adressiert angesprochen werden, ausgenommen nach der Aussendung von Befehlen, die nachfolgend die Übertragung von Wahlwunsch durch beliebige Teilnehmergeräte erlauben.

19. Lokales Vermittlungs- und Übertragungssystem nach Anspruch 1, 6 und 18, dadurch gekennzeichnet, daß die Funkvermittlungseinrichtung (2.2; 4.2), solange nicht laufende Vermittlungsvorgänge andere Aktivitäten erfordern, einen Freiruf (F) aussendet, wenn mindestens ein vermittelbarer Nachrichtenkanal zur Verfügung steht, oder einen bedingten Freiruf (N) aussendet, wenn kein vermittelbarer Nachrichtenkanal zur Verfügung steht, so daß die Teilnehmeranschaltgeräte (2.51...; 4.51...) nach einem Freiruf Wahlwunsch und nach einem bedingten Freiruf nur Wahlwunsch (W) mit Vorrangmerkmal (Notruf, andere bevorrechtete Rufnummern) anmelden können (Tabelle 2).

20. Lokales Vermittlungs- und Übertragungssystem nach Anspruch 1, 6, 18 und 19, dadurch gekennzeichnet, daß bei gleichzeitigem Wahlwunsch (W) mehrerer Teilnehmeranschaltgeräte (2.51...; 4.51...) die Funkvermittlungseinrichtung (2.2; 4.2) keinem der sendenden Teilnehmeranschaltgeräte (2.51...; 4.51...) eine Wahlwunschquittung überträgt und der Linkcontroller des Teilnehmeranschaltgerätes (2.51...; 4.51...) bei ausbleibender Wahlwunschquittung für den Teilnehmer noch während dessen Wahleingabe ein Besetztzeichen generiert.

21. Lokales Vermittlungs- und Übertragungssystem nach Anspruch 1, 18 und 19, dadurch gekennzeichnet, daß vom Teilnehmeranschaltgerät (2.51...; 4.51...) bei Schaltung einer Leitungsschleife an der a/b-Schnittstelle dem Teilnehmer unabhängig vom Zustand des Systems ein Wahlzeichen gesendet wird und die am Teilnehmerendgerät gewählten Ziffern zwischengespeichert und auf Vorliegen eines Vorrangmerkmals geprüft werden und nach gültiger Entscheidung und Empfang eines Freirufes sowohl Wahlwunsch als auch Wahlwunsch mit Notrufmerkmal übertragen wird und in diesem Falle bei fehlendem Notrufmerkmal dem Teilnehmer über die a/b-Schnittstelle ein Besetztzeichen gesendet wird.

22. Lokales Vermittlungs- und Übertragungssystem nach Anspruch 1, 18, 20 und 21, dadurch gekennzeichnet, daß vom Linkcontroller des Teilnehmeranschaltgerätes (2.51...; 4.51...) bei ausbleibender Wahlwunschquittung nach Aussendung eines Wahlwunsches mit Vorrangmerkmal automatisch bis zu zwei Wiederholungen der Aussendung von Wahlwunsch mit Vorrangmerkmal erfolgen und erst nach drei erfolglosen Versuchen für den Teilnehmer ein Besetztzeichen geriert wird.

23. Lokales Vermittlungs- und Übertragungssystem nach Anspruch 1, 18 und 19, dadurch gekennzeichnet, daß von der Funkvermittlungseinrichtung (2.2; 4.2), wenn kein vermittelbarer Nachrichtenkanal verfügbar ist, bei Vorliegen eines Wahlwunsches mit Vorrangmerkmal, eine bestehende Fernmeldeverbindung, vorrangig eine lokale Verbindung, getrennt wird, indem parallel zur Wahlwunschquittung im Organisationskanal (2.40; 4.40) an das fordernde Teilnehmeranschaltgerät (2.51...; 4.51...), über den Kanalcontroller (2.31...2.3n; 4.31...4.3n) des Nachrichtenkanals, über welchen die zu trennende Verbindung läuft, ein Abbruchbefehl gesendet wird, der das dort aktive Teilnehmeranschaltgerät (2.51...; 4.51...) veranlaßt, auf den Organisationskanal (2.40; 4.40) umzuschalten, im Organisationskanal (2.40; 4.40) mit einer Anwesenheitsmeldung (A) zu quittieren und dem Teilnehmer über die a/b-Schnittstelle ein Besetztzeichen zu senden.

24. Lokales Vermittlungs- und Übertragungssystem nach Anspruch 1 und 18, dadurch gekennzeichnet, daß nach allen Befehlen, die einem Teilnehmeranschaltgerät (2.51...; 4.51...) den Übergang vom Organisationskanal (2.40; 4.40) in einen Nachrichtenkanal anweisen, die Quittung des Teilnehmeranschaltgerätes (2.51...; 4.51...) und alle weiteren Protokollabwicklungen in dem zugewiesenen Nachrichtenkanal zwischen Kanalcontroller (2.31...2.3n;4.31...4.3n) und Linkcontroller erfolgen und daß diese Befehle für alle anderen Teilnehmeranschaltgeräte (2.51...; 4.51...) wie Freiruf zu werten sind.

25. Lokales Vermittlungs- und Übertragungssystem nach Anspruch 1, 8 und 19, dadurch gekennzeichnet, daß bei Freiruf (F) und bedingtem Freiruf (N) der Teilnehmernummernteil und der Datenteil von der Funkvermittlungseinrichtung (2.2; 4.2) alternierend mit Datum oder Uhrzeit belegt werden, die im Teilnehmeranschaltgerät (2.51...; 4.51...) für das Stellen einer Software-Uhr genutzt werden.

26. Lokales Vermittlungs- und Übertragungssystem nach Anspruch 1, 8 und 13, dadurch gekennzeichnet, daß an einzelne oder Gruppen von Teilnehmeranschaltgeräten (2.51...; 4.51...) einstellige alphanumerische Paginginformationen (P) im Organisationskanal (2.40; 4.40) übertragen werden können, indem eine Hexadezimalstelle des Datenteils eines Zeitschlitzes mit dieser Information belegt wird und mehrstellige alphanumerische Paginginformationen übertragen werden können, indem in einem ersten Befehl die Paginganweisung übermittelt wird und in einem zweiten Befehl die Kommandierung in einen Nachrichtenkanal erfolgt, in welchem anschließend die Paginginformationen übertragen werden und welcher für diese Zeit von der Funkvermittlungseinrichtung (2.2; 4.2) an die Fernmeldevermittlungseinrichtung (2.1; 4.1) als belegt gemeldet wird.

27. Lokales Vermittlungs- und Übertragungssystem nach Anspruch 1, 7, 8, 13 und 26, dadurch gekennzeichnet, daß Paginginformationen im Linkcontroller des Teilnehmeranschaltgerätes (2.51...; 4.51...) gespeichert werden, der Informationseingang an ein Systemtelefon signalisiert und auf Anforderung des Teilnehmers am Systemtelefon oder am Teilnehmeranschaltgerät (2.51...; 4.51...) zur Anzeige gebracht wird.

28. Lokales Vermittlungs- und Übertragungssystem nach Anspruch 1, 8, 13 und 26, dadurch gekennzeichnet, daß bei Systemen, die keine dynamische Veränderung der Teilnehmernummern entsprechend Anspruch 12 benutzen, Einzel- und Gruppenrufe derart realisiert werden, daß im Teilnehmernummernteil die Rufnummer des gewünschten Einzelteilnehmers oder eines beliebigen zur zu rufenden Gruppe gehörenden Teilnehmers übertragen wird und eine Hexadezimalstelle des Datenteils benutzt wird, um festzulegen, welche Stellen der Rufnummer gültig sind, womit sich als Auswahlmöglichkeiten der Einzelruf, Ruf für Hauptgruppen, Ruf für Untergruppen einer Hauptgruppe, Ruf der Leiter der Hauptgruppen oder Nr. 2 oder Nr. 3 etc. der Hauptgruppen, Ruf für Leiter der Untergruppen einer Hauptgruppe oder der Nr. 2 oder Nr. 3 etc. der Untergruppen einer Hauptgruppe ergeben (Tabelle 3).

## Claims

1. Local switching and transmission system which is organized as a local radio cell, comprising a central fixed radio station and a multiplicity of local subscriber access units, and is connected as a local exchange or a private branch exchange to the public telecommunications network and allows those subscribers who for widely differing reasons cannot be connected via subscriber lines to a switching device or whose connection in this form is not expedient to have access to the public telecommunications network by the use of wire-free transmission, and in the case of which, for operation of the system when the number of subscribers is greater than the number of duplex radio channels (1.40...; 2.40...; 4.40...) used (referred to as information channels in the following text) in the central fixed radio station, a radio switching device (2.2; 4.2) is present which uses at least one duplex information channel as a standard organization channel (2.40; 4.40) for signalling, switching, administration, service and special functions during radio operation between the fixed radio station and the subscriber access units (2.51...; 4.51...) which is continuously received and used in time-division multiplex form on the transmission side by all those subscriber access units (2.51...; 4.51...) which are in operation but are not active, and a telecommunications switching device (2.1; 4.1) is present, in which an information channel (2.40...; 4.40...) is connected to in each case one port and which carries out the channel-related switching, the radio switching device (2.2; 4.2) being connected via a databus (Db) to control and switching devices (2.31...2.3n; 4.31...4.3n) (referred to as channel controllers (2.31...2.3n; 4.31...4.3n) in the following text), which are arranged between the ports (E&M/1. . .E&M/n) of the telecommunications switching device (2.1; 4.1) and the information channels (2.40...; 4.40...), and the channel controller (2.31...2.3n; 4.31...4.3n) simulating the subscriber access during the setting up of telecommunications links until direct through-switching to the subscriber access unit (2.51...; 4.51...) takes place via the radio switching path, **characterized in that** the setting up of the radio link takes place during the subscriber's dialling process, in that the dialled numbers are transmitted via the associated voice channel, and in that, once dialling has been carried out, the subscriber is connected directly to the network and the subscriber can thus not perceive any difference from a wire-based a/b main connection.

2. Local switching and transmission system according to Claim 1, characterized in that the channel controllers (2.31...2.3n; 4.31...4.3n) are connected to the E&M ports (E&M/1...E&M/n) of the telecommunications switching device (2.1; 4.1), and the radio switching device (2.2; 4.2) carries out the signal interchange with the telecommunications switching device (2.1; 4.1) via the channel controllers (2.31...2.3n; 4.31...4.3n).

3. Local switching and transmission system according to Claim 1, characterized in that, in the case of digital telecommunications switching devices, the channel controllers (2.31...2.3n; 4.31...4.3n) are connected to the subscriber ports (E&M/1...E&M/n) of the PCM primary multiplexer, and the PCM channels which are used for signalling and synchronization are connected to the radio switching device (2.2; 4.2), and the radio switching device (2.2; 4.2) carries out the signalling to the telecommunications switching device (2.1; 4.1) via the PCM signalling channel, either in accordance with the E&M protocol or in accordance with the S_{2M} protocol.

4. Local switching and transmission system according to Claim 1, characterized in that, in the case of digital telecommunications switching devices (4.1), these devices and the radio switching device (4.2) are connected via a special data interface (Dv), via which all the signalling is handled, independently of post-office typical interfaces.

5. Local switching and transmission system according to Claim 1, 2, 3 or 4, characterized in that other information channels (2.41...; 4.41...), which are intended for dialled calls, are used temporarily as organization channels by the radio switching device (2.2; 4.2), in addition to the standard organization channel (2.40; 4.40), and these information channels (2.41...;4.41...) are reported to the telecommunications switching device (2.1; 4.1) as being busy, via the channel controller (2.31...2.3n; 4.31...4.3n) of the relevant information channel, via the PCM signalling channel or via a special data interface, so that these information channels can no longer be used with dialled calls.

6. Local switching and transmission system according to Claim 1, characterized in that the radio switching device (2.2; 4.2) has at least one control assembly (called the organization channel controller - OKC - in the following text), which communicates with the subscriber access units (2.51...; 4.51...) via the organization channel or channels (2.40; 4.40) using a special organization channel protocol, and in that the radio switching device (2.2; 4.2) can operate as an OKC the channel controller (2.31...2.3n; 4.31...4.3n) of each information channel which is intended for temporary use as an organization channel via the databus (Db), via which all the channel controllers (2.31...2.3n; 4.31...4.3n) are connected to the radio switching device (2.2; 4.2).

7. Local switching and transmission system according to Claims 1 and 6, characterized in that each subscriber access unit (2.51...; 4.51...) has a control assembly (called a link controller - LC - in the following text) which communicates with the radio switching device (2.2; 4.2) via the organization channel or channels using the special organization channel protocol, and which controls a telephone adapter assembly which is connected to the information channel and provides an a/b interface for the connection of subscriber terminals.

8. Local switching and transmission system according to Claim 1, characterized in that the synchronous organization channel (2.40; 4.40), which is constructed identically in both operating directions, uses digital time-division multiplex transmission without a mainframe structure and data frames are transmitted in successive timeslots (Z) of constant length, which data frames each contain an instruction and comprise a precursor (VO) , a code block (C), a subscriber number part (T), an information part (I), a checksum part (P) and a follower (NA) (Table 1).

9. Local switching and transmission system according to Claims 1 and 8, characterized in that, in another variant, the data frame is not identically constructed in the two transmission directions in that, in the transmission direction from the fixed radio station to the subscriber access units (2.51...; 4.51...), the length of the precursor (VO) is minimized in favour of the information part (I) and the checksum part (P).

10. Local switching and transmission system according to Claims 1, 6, 7 and 8, characterized in that the code block (C) comprises at least two repetitions of a four-digit Barker code, and the receiving parts in the OKC of the radio switching device (2.2; 4.2) and the LC in the subscriber access units (2.51...; 4.51...) have a timebase of sufficient accuracy to be able to decide during reception of only one code word which repetition of the transmission of the code word this is, so that the frame synchronization can be ensured even in the case of interference which leads to loss of an entire code word.

11. Local switching and transmission system according to Claims 1 and 8, characterized in that the number which is used in the subscriber number part (T) need not be identical to the telephone number of the subscriber, and the recoding corresponding to the two operating directions is for this purpose carried out for all the processes in the radio switching device (2.2; 4.2), using a key table.

12. Local switching and transmission system according to Claims 1, 8 and 11, characterized in that the key table in the radio switching device (2.2; 4.2) is subject to continuous dynamic change, and the subscriber access units (2.51...; 4.51...) are set to their respective current number by means of service instructions which are transmitted in the organization channel (2.40; 4.40) and, as a result of this, the subscribers appear with randomly changing numbers during radio operation.

13. Local switching and transmission system according to Claims 1 and 8, characterized in that the information part (I) comprises a single-digit hexadecimal instruction word and a multidigit data part which is associated with the instruction word.

14. Local switching and transmission system according to Claims 1 and 8, characterized in that the checksum part includes a checksum of the net information from the subscriber number part and the information part (I).

15. Local switching and transmission system according to Claims 1 and 8, characterized in that the follower (N) in the transmission direction from the fixed radio station to the subscriber access units (2.51...; 4.51...) comprises the transmission of one or more bits at the same logic level, and no transmission takes place in the transmission direction from the subscriber access units (2.51...; 4.51...) to the fixed radio station, and the duration of the follower (N) is dimensioned such that the delay time differences, resulting from the different distance to the fixed radio station, of two successively transmitting subscriber access units (2.51...; 4.51...) do not lead to superimposition of the signals on reception in the fixed radio station.

16. Local switching and transmission system according to Claims 1 and 8, characterized in that the information of the subscriber number part, the information part and the checksum part is transmitted in BCH-coded form and, subsequently, using block interleaving, so that successive bit errors up to a maximum number of "correctable bit errors per code word" * "interleaving factor", do not lead to data losses.

17. Local switching and transmission system according to Claims 1, 6 and 7, characterized in that responses and acknowledgements to transmissions from the opposing terminal take place with a constant difference of at least one data frame length in both operating directions in the organization channel (2.40; 4.40).

18. Local switching and transmission system according to Claims 1, 6 and 7, characterized in that the data interchange in the organization channel (2.40; 4.40) is carried out using the master-slave method, the radio exchange operating as the master and the subscriber access units (2.51...;4.51...) reacting only when they have been addressed, except after the transmission of instructions which subsequently allow the transmission of a dialling request by any subscriber units.

19. Local switching and transmission system according to Claims 1, 6 and 18, characterized in that, as long as no ongoing switching processes require other activities, the radio switching device (2.2; 4.2) transmits a free call (F) when at least one switchable information channel is available, or transmits a conditional free call (N) when no switchable information channel is available, such that the subscriber access units (2.51...; 4.51...) can report a dialling request after a free call and only a dialling request (W) with a priority feature (emergency call, other previously authorized telephone numbers) after a conditional free call (Table 2).

20. Local switching and transmission system according to Claims 1, 6, 18 and 19, characterized in that, in the event of a simultaneous dialling request (W) from a plurality of subscriber access units (2.51...; 4.51...), the radio switching device (2.2; 4.2) does not transmit a dialling request acknowledgement to any of the transmitting subscriber access units (2.51...; 4.51...), and in the absence of a dialling request acknowledgement for the subscriber, the link controller of the subscriber access unit (2.51...; 4.51...) continues to generate a busy signal during this subscriber's dialling input.

21. Local switching and transmission system according to Claims 1, 18 and 19, characterized in that a dialling signal is transmitted from the subscriber access unit (2.51...; 4.51...) to the subscriber, irrespective of the state of the system, when a line loop is connected to the a/b interface, and the digits dialled on the subscriber terminal are buffer-stored and checked for the presence of a priority feature and, after a final decision and reception of a free call, both the dialling request and the dialling request with an emergency feature are transmitted and, in this case, if there is no emergency dialling feature, a busy signal is transmitted to the subscriber via the a/b interface.

22. Local switching and transmission system according to Claims 1, 18, 20 and 21, characterized in that, in the absence of a dialling request acknowledgement after a dialling request with a priority feature has been transmitted, the link controller of the subscriber access unit ((2.51...; 4.51...) automatically carries out up to two repetitions of the transmission of the dialling request with a priority feature, and a busy signal for the subscriber is generated only after three unsuccessful attempts.

23. Local switching and transmission system according to Claims 1, 18 and 19, characterized in that when no switchable information channel is available and a dialling request with a priority feature occurs, an existing telecommunications link, with priority being given to a local link, is disconnected from the radio switching device (2.2; 4.2) in that, in parallel with the dialling request acknowledgement in the organization channel (2.40; 4.40) to the requesting subscriber access unit ((2.51...; 4.51...), a disconnect instruction, which causes the subscriber access unit ((2.51...; 4.51...) which is active there to switch over to the organization channel (2.40; 4.40), is transmitted via the channel controller (2.31...2.3n; 4.31...4.3n) of the information channel via which the link to be disconnected exists, to acknowledge in the organization channel (2.40; 4.40) with a presence message (A) and to transmit a busy signal to the subscriber via the a/b interface.

24. Local switching and transmission system according to Claims 1 and 18, characterized in that the acknowledgement of the subscriber access unit (2.51...; 4.51...) and all other protocol handling actions in the associated information channel between the channel controller (2.31...2.3n; 4.31...4.3n) and the link controller are carried out after all instructions which instruct a subscriber access unit (2.51...; 4.51...) to transfer from the organization channel (2.40; 4.40) to an information channel, and in that these instructions can be regarded as a free call for all the other subscriber access units (2.51...; 4.51...).

25. Local switching and transmission system according to Claims 1, 8 and 19, characterized in that, in the case of a free call (F) and a conditional free call (N), the subscriber number part and the data part are alternately filled by the radio switching device (2.2; 4.2) with the date or the time of day which are used in the subscriber access unit (2.51...; 4.51...) for setting a software clock.

26. Local switching and transmission system according to Claims 1, 8 and 13, characterized in that single-digit alphanumeric paging information (P) can be transmitted in the organization channel (2.40; 4.40) to individual subscriber access units or groups of subscriber access units (2.51...; 4.51...), in that a hexadecimal digit in the data part of a timeslot is filled with this information, and multidigit alphanumeric paging information can be transmitted by transmitting the paging instruction in a first instruction and by carrying out the command to change to an information channel in a second instruction, in which information channel the paging information is then transmitted and which, during this time, is reported by the radio switching device (2.2; 4.2) to the telecommunications switching device (2.1; 4.1) as being busy.

27. Local switching and transmission system according to Claims 1, 7, 8, 13 and 26, characterized in that paging information is stored in the link controller of the subscriber access unit (2.51...; 4.51...), the input of information is signalled to the system telephone and, on request by the subscriber, is caused to be displayed on the system telephone or on the subscriber access unit (2.51...; 4.51...).

28. Local switching and transmission system according to Claims 1, 8, 13 and 26, characterized in that, in the case of systems which do not use any dynamic change in the subscriber numbers according to Claim 12, individual calls and group calls are carried out in such a manner that the telephone number of the desired individual subscriber or of any subscriber belonging to the calling group is transmitted in the subscriber number part, and a hexadecimal digit in the data part is used to define which digits of the telephone number are valid, as a result of which the individual call, call for main groups, call for subgroups of a main group, calls to the manager of the main groups or No. 2 or No. 3 etc. of the main groups, call for the manager of the subgroups of a main group or the No. 2 or No. 3 etc. of the subgroups of a main group are produced as selection options (Table 3).

## Revendications

1. Système local de commutation et de transmission, lequel est organisé sous la forme d'une cellule radio locale comprenant une station de radiotéléphonie de base centrale et une pluralité d'appareils de connexion d'abonnés décentralisés et est raccordé, sous la forme d'un central urbain ou d'un central privé, au réseau de télécommunication public et permet aux abonnés qui, pour des raisons diverses, ne peuvent pas être raccordés au moyen de lignes d'abonnés à un équipement de commutation ou dont le raccordement n'est pas avantageux sous cette forme, d'accéder au réseau de télécommunication public par le biais d'une transmission sans fil et dans lequel, pour l'exploitation du système avec un nombre d'abonnés supérieur au nombre de canaux radio duplex utilisés (1.40...; 2.40...; 4.40...) (dénommés canaux de communication par la suite) dans la station de radiotéléphonie de base centrale, un dispositif de commutation radio (2.2; 4.2), qui utilise au moins un canal de communication duplex comme canal d'organisation standard (2.40...; 4.40...) pour la signalisation, la commutation, la gestion, la maintenance et les services spéciaux de fonctionnement radio entre la station de radiotéléphonie de base et les appareils de connexion d'abonnés (2.51...; 4.51...), lequel est utilisé en permanence pour la réception et l'émission en commutation par l'ensemble des appareils de connexion d'abonnés en fonctionnement, mais non actifs (2.51...; 4.51...), et un dispositif de commutation de télécommunication (2.1; 4.1), dans lequel chaque canal de communication (2.40...; 4.40...) est connecté à un port, respectif et lequel exécute la commutation relative au canal, sont présents, le dispositif de commutation radio (2.2;4.2) étant relié par un bus de données (Db) à des dispositifs de commande et de commutation (2.31... 2.3n; 4.31... 4.3n) (dénommés par la suite contrôleurs de canaux 2.31... 2.3n; 4.31... 4.3n), lesquels sont disposés entre les ports (E&M/1... E&M/n) du dispositif de commutation de télécommunication (2.1; 4.1) et les canaux de communication (2.40...; 4.40...), et le contrôleur de canal (2.31... 2.3n; 4.31... 4.3n) simulant le raccordement de l'abonné lors de l'établissement de liaisons de télécommunication jusqu'à ce que la commutation directe à l'appareil de connexion d'abonné soit établie au moyen de la commutation radio (2.51...;4.51...), caractérisé en ce que l'établissement de la liaison radio se produit pendant le processus de composition de l'abonné, en ce que les chiffres composés sont transmis via le canal vocal alloué et en ce que l'abonné est connecté directement au réseau après que le numéro a été composé et que, de la sorte, aucune déviation du raccordement principal a/b câblé n'est perceptible par l'abonné.

2. Système local de commutation et de transmission suivant la revendication 1, caractérisé en ce que les contrôleurs de canaux (2.31... 2.3n; 4.31... 4.3n) sont connectés aux ports E&M (E&M/1... E&M/n) du dispositif de commutation de télécommunication (2.1; 4.1) et en ce que le dispositif de commutation radio (2.2; 4.2) effectue l'échange de signaux avec le dispositif de commutation de télécommunication (2.1; 4.1) via les contrôleurs de canaux (2.31... 2.3n; 4.31... 4.3n).

3. Système local de commutation et de transmission suivant la revendication 1, caractérisé en ce que, dans le cas des dispositifs de commutation de télécommunications numériques, les contrôleurs de canaux (2.31... 2.3n; 4.31... 4.3n) sont connectés aux ports d'abonnés (E&M/1... E&M/n) du multiplexeur primaire PCM et en ce que les canaux PCM utilisés pour la transmission de signaux et la synchronisation sont. connectés au dispositif de commutation radio (2.2; 4.2) et en ce que le dispositif de commutation radio (2.2; 4.2) exécute la transmission de signaux au dispositif de commutation de télécommunication (2.1; 4.1) via le canal de signalisation PCM, soit selon le protocole E&M soit selon le protocole S_{2M}.

4. Système local de commutation et de transmission suivant la revendication 1, caractérisé en ce que, dans le cas des dispositifs de commutation de télécommunications numériques (4.1), ceux-ci et le dispositif de commutation radio (4.2) sont reliés via une interface de données spécifique (Dv), au moyen de laquelle l'ensemble du trafic des signaux est traité indépendamment des interfaces typiques du réseau de télécommunication.

5. Système local de commutation et de transmission suivant la revendication 1, 2, 3 ou 4, caractérisé en ce que, en plus du canal d'organisation standard (2.40; 4.40), le dispositif de commutation radio (2.2; 4.2) peut utiliser momentanément comme canaux d'organisation d'autres canaux de communication (2.41...; 4.41...) destinés aux liaisons commutées et signale ces canaux d'organisation (2.41...; 4.41...) comme "occupés" au dispositif de commutation de télécommunication (2.1, 4.1) via le contrôleur de canal (2.31... 2.3n; 4.31... 4.3n) du canal de communication correspondant, le canal de transmission des signaux PCM ou une interface de données spécifique, de façon à ce que ces canaux de communication ne puissent plus être occupés par des liaisons commutées.

6. Système local de commutation et de transmission suivant la revendication 1, caractérisé en ce que le dispositif de commutation radio (2.2; 4.2) dispose d'au moins un composant de commande (dénommé par la suite contrôleur de canal d'organisation - CCO), lequel communique avec les appareils de connexion d'abonnés (2.51...; 4.51...) via le/les canal/canaux d'organisation (2.40; 4.40) en utilisant un protocole spécial de canal d'organisation et en ce que le dispositif de commutation radio (2.2; 4.2) peut exploiter comme CCO le contrôleur de canal (2.31... 2.3n; 4.31... 4.3n) de chaque canal déterminé provisoirement comme canal d'organisation via le bus de données (Db), par l'intermédiaire duquel l'ensemble des contrôleurs de canaux (2.31... 2.3n; 4.31... 4.3n) sont reliés au dispositif de commutation radio (2.2; 4.2).

7. Système local de commutation et de transmission suivant les revendications 1 et 6, caractérisé en ce que chaque appareil de connexion d'abonné (2.51...; 4.51...) dispose d'un module de commande (dénommé contrôleur de liaison - CL - dans la suite du document), qui communique via le/les canal/canaux d'organisation avec le dispositif de commutation radio (2.2; 4.2) en utilisant le protocole spécifique de canal d'organisation et commande un module adaptateur téléphonique, lequel est connecté au canal de communication et réalise une interface a/b pour le raccordement de terminaux d'abonnés.

8. Système local de commutation et de transmission suivant la revendication 1, caractérisé en ce que, dans le canal d'organisation synchrone (2.40; 4.40) et identique dans les deux directions de fonctionnement, on travaille au moyen d'une transmission numérique avec multiplexage dans le temps sans structure de trame principale et en ce qu'on transmet en respectant des intervalles (Z) successifs de longueur constante, des trames de données qui comportent respectivement une instruction et qui sont constituées d'un précurseur (VO), d'un bloc de codage (C), d'un élément de numéro d'abonné (T), d'un élément d'information (I), d'un élément de total de contrôle (P) et d'un élément postposé (NA) (tableau 1).

9. Système local de commutation et de transmission suivant les revendications 1 et 8, caractérisé en ce que, dans une autre variante, la trame de données n'est pas structurée de manière identique dans les deux directions de transmission, en ce que, dans la direction d'émission de la station de radiotéléphonie. de base vers les appareils de connexion d'abonné (2.51...; 4.51...), la longueur du précurseur (VO) est minimisée en faveur de l'élément d'information (I) et de l'élément de total de contrôle (P).

10. Système local de commutation et de transmission suivant les revendications 1, 6, 7 et 8, caractérisé en ce que le bloc de codage (C) est constitué de la répétition au moins double d'un code Barker à quatre chiffres et en ce que les éléments de réception des éléments CCO du dispositif de commutation radio (2.2; 4.2) et des éléments CL dans les appareils de connexion d'abonnés (2.51...; 4.51...) disposent d'une base de temps de précision suffisante afin de pouvoir décider, lors de la réception de seulement un mot de code, du quantième envoi du mot de code il s'agit, de sorte que, même dans le cas de dérangements conduisant à la perte d'un mot de code complet, on puisse assurer la synchronisation de trame.

11. Système local de commutation et de transmission suivant les revendications 1 et 8, caractérisé en ce que le numéro utilisé dans l'élément de numéro d'abonné (T) ne doit pas être identique au numéro d'appel de l'abonné et en ce que le décryptage correspondant aux deux sens de fonctionnement est réalisé à cet effet dans le dispositif de commutation radio (2.2; 4.2) au moyen d'une table de décryptage pour tous les processus de conversion correspondants.

12. Système local de commutation et de transmission suivant les revendications 1, 8 et 11, caractérisé en ce que la table de décryptage est soumise à une modification dynamique permanente dans le dispositif de commutation radio (2.2; 4.2) et en ce que les appareils de connexion d'abonnés (2.51... ;4.51...) sont réglés au moyen d'instructions de maintenance transmises dans le canal d'organisation (2.40; 4.40) sur leur numéro actuel respectif et en ce que les abonnés, en fonctionnement radio, apparaissent de ce fait avec des numéros se modifiant de manière aléatoire.

13. Système local de commutation et de transmission, suivant les revendications 1 et 8, caractérisé en ce que l'élément d'information (I) comprend un mot de commande hexadécimal à une position et un élément de données à plusieurs caractères faisant partie du mot de commande.

14. Système local de commutation et de transmission suivant les revendications 1 et 8, caractérisé en ce que l'élément de total de contrôle comprend un total de contrôle concernant les informations nettes de l'élément de numéro d'abonné et de l'élément d'information (I).

15. Système local de commutation et de transmission suivant les revendications 1 et 8, caractérisé en ce que l'élément postposé (N) est constitué dans le sens d'émission de la station de radiotéléphonie de base en direction des appareils de connexion d'abonnés (2.51...; 4.51...) de l'émission d'un ou plusieurs bits présentant le même niveau de logique et en ce qu'aucune émission ne se déroule dans le sens d'émission des appareils de connexion d'abonnés (2.51...; 4.51...) vers la station de radiotéléphonie de base et en ce que la durée de l'élément postposé (N) est mesurée de telle façon que les différences de temps de propagation de deux appareils de connexion d'abonnés (2.51...; 4.51...) émettant à la suite l'un de l'autre, qui sont dues à des éloignements différents par rapport à la station de radiotéléphonie de base, ne conduisent pas lors de la réception dans la station de radiotéléphonie de base à un chevauchement des signaux.

16. Système local de commutation et de transmission suivant les revendications 1 et 8, caractérisé en ce que les informations de l'élément de numéro d'abonné, l'élément d'information et l'élément de total de contrôle sont codées BCH et ensuite transmises avec utilisation de la technique d'entrelacement des blocs de telle sorte que, jusqu'à un nombre maximal d"'erreurs de bit corrigibles par mot de code" * "facteur entrelacement", des erreurs de bit successives ne conduisent pas à des pertes de données.

17. Système local de commutation et de transmission suivant les revendications 1, 6 et 7, caractérisé en ce que, dans le canal d'organisation (2.40; 4.40), des réponses et des acquittements se produisent dans les deux sens d'émission en réaction à des émissions de l'autre poste avec une différence constante d'au moins une longueur de trame de données.

18. Système local de commutation et de transmission suivant les revendications 1, 6 et 7, caractérisé en ce que l'échange des données dans le canal d'organisation (2.40; 4.40) est exécuté selon le procédé Maître-Esclave, dans lequel le central radio fait office de maître et les appareils de connexion d'abonnés (2.51...;4.51...) ne réagissent que lorsqu'ils sont sollicités par adressage, excepté après l'émission de commandes qui permettent à leur suite la transmission d'un souhait d'appel par des appareils d'abonnés quelconques.

19. Système local de commutation et de transmission suivant les revendications 1, 6 et 18, caractérisé en ce que le dispositif de commutation radio (2.2; 4.2) émet un signal de ligne libre (F) tant que des processus de commutation en cours n'exigent pas d'autres activités, lorsqu'au moins un canal de communication en état de transmettre est disponible, ou émet un signal de ligne libre conditionnel (N), lorsqu'aucun canal de communication en état de transmettre n'est disponible, de façon à ce que les appareils de connexion d'abonnés (2.51...; 4.51...) puissent annoncer un souhait d'appel après un signal de ligne libre et seulement un souhait d'appel (W) à caractéristique prioritaire (services de secours, autres numéros d'appel prioritaires) (tableau 2) après un signal de ligne libre conditionnel.

20. Système local de commutation et de transmission suivant les revendications 1, 6, 18 et 19, caractérisé en ce que, dans le cas de souhaits d'appel (W) simultanés de plusieurs appareils de connexion d'abonnés (2.51..., 4.51...), le dispositif de commutation, radio (2.2; 4.2) ne transmet à aucun des appareils de connexion d'abonnés en émission (2.51..., 4.51...) d'acquittement de souhait d'appel et en ce que, en l'absence d'acquittement du souhait d'appel, et le contrôleur de liaison de l'appareil de connexion d'abonnés (2.51..., 4.51...) produit à l'intention de l'abonné, encore pendant l'introduction du numéro, un signal indiquant que la ligne est occupée.

21. Système local de commutation et de transmission suivant les revendications 1, 18 et 19, caractérisé en ce qu'un signal de ligne libre est envoyé à l'abonné par l'appareil de connexion d'abonnés (2.51..., 4.51...) par commutation d'une boucle de ligne à l'interface a/b indépendamment de l'état du système, en ce que les chiffres composés au terminal d'abonné sont mémorisés temporairement et vérifiés pour présence éventuelle d'une caractéristique prioritaire et, après décision valable et réception d'un signal de ligne libre, tant le souhait d'appel que le souhait d'appel avec caractéristique d'appel de secours sont transmises et, dans ce cas, en l'absence d'une caractéristique prioritaire, un signal "occupé" est envoyé à l'abonné via l'interface a/b.

22. Système local de commutation et de transmission suivant les revendications 1, 18, 20 et 21, caractérisé en ce que jusqu'à deux répétitions de l'émission du souhait d'appel avec caractéristique prioritaire sont produites automatiquement par le contrôleur de liaison de l'appareil de connexion d'abonnés (2.51..., 4.51...) en l'absence d'acquittement du souhait d'appel après émission d'un souhait d'appel avec caractéristique prioritaire et en ce que, à la suite de trois tentatives infructueuses pour l'abonné, un signal "occupé" est généré.

23. Système local de commutation et de transmission suivant les revendications 1, 18, et 19, caractérisé en ce que, en présence d'un souhait d'appel à caractère prioritaire alors qu'aucun canal de communication en état de transmettre n'est disponible, l'installation de radiotéléphonie de base (2.2; 4.2) coupe une liaison radio existante, et prioritairement une liaison locale, en ceci que, parallèlement à l'acquittement de souhait d'appel envoyé dans le canal d'organisation (2.40; 4.40) à l'appareil de connexion d'abonnés qui établit la requête (2.51...;4.51...), une commande de fin anormale est envoyée via le contrôleur de canal (2.31... 2.3n; 4.31... 4.3n) du canal de communication par lequel passe la liaison à couper, laquelle amène l'appareil de connexion d'abonné (2.51... ;4.51...) qui y est actif à commuter sur le canal d'organisation (2.40; 4.40), à confirmer dans le canal d'organisation (2.40; 4.40) au moyen d'un message de présence (A) et à envoyer un signal "occupé" à l'abonné via l'interface a/b.

24. Système local de commutation et de transmission suivant les revendications 1 et 18, caractérisé en ce que, à la suite de toutes les commandes qui indiquent à un appareil de connexion d'abonnés (2.51... ; 4.51...) le changement de statut du canal d'organisation (2.40;4.40) en canal de communication, ont lieu l'acquittement de l'appareil de connexion d'abonnés (2.51...; 4.51...) et toutes les autres procédures de protocole dans le canal de communication alloué entre le contrôleur de canal (2.31... 2.3n; 4.31... 4.3n) et le contrôleur de liaison et en ce que ces commandes doivent être considérées comme signal de ligne libre pour tous les autres appareils de connexion d'abonnés (2.51...; 4.51...)

25. Système local de commutation et de transmission suivant les revendications 1, 8 et 19, caractérisé en ce que, dans le cas d'un signal de ligne libre (F) et d'un signal de ligne libre conditionnel (N), l'élément du numéro d'abonné et l'élément de données sont utilisés par le dispositif de commutation radio (2.2; 4.2) en alternance pour la date ou l'heure, lesquelles peuvent être utilisées dans l'appareil de connexion d'abonnés (2.51...; 4.51...) pour la mise à l'heure d'une horloge logicielle.

26. Système local de commutation et de transmission suivant les revendications 1, 8 et 13, caractérisé en ce que des informations alphanumériques relatives à un dispositif de recherche de personnes (P) peuvent être transmises à des appareils particuliers ou à des groupes d'appareils de connexion d'abonnés (2.51...; 4.51...) dans le canal d'organisation (2.40; 4.40), en ceci qu'un emplacement hexadécimal de l'élément de données d'un intervalle de temps est occupé par cette information et que des informations alphanumériques à plusieurs positions du dispositif de recherche de personnes peuvent être transmises, en ceci que l'instruction du dispositif de recherche de personnes est transmise dans une première commande et que, dans une deuxième commande, a lieu la commande dans un canal de communication, dans lequel sont ensuite transmises les informations du dispositif de recherche de personnes et qui, pendant cette période, est signalé au dispositif de commutation de télécommunication (2.1; 4.1) comme étant occupé par le dispositif de commutation radio (2.2; 4.2).

27. Système local de commutation et de transmission suivant les revendications 1, 7, 8, 13 et 26, caractérisé en ce que les informations du dispositif de recherche de personnes sont mémorisées dans le contrôleur de liaison de l'appareil de connexion d'abonnés (2.51...; 4.51...), et l'arrivée d'informations est signalée à un téléphone du dispositif, et, à la requête de l'abonné, est affichée sur le téléphone du dispositif ou sur l'appareil de connexion d'abonnés (2.51...; 4.51...)

28. Système local de commutation et de transmission suivant les revendications 1, 8, 13 et 26, caractérisé en ce que, dans le cas des systèmes qui n'utilisent aucune modification dynamique des numéros des abonnés suivant la revendication 12, les appels individuels et les appels groupés sont réalisés de telle sorte que, dans l'élément de numéro d'abonné, le numéro de l'abonné individuel souhaité ou d'un abonné quelconque appartenant au groupe des personnes à appeler est, transmis et qu'un emplacement hexadécimal de l'élément de données est utilisé afin de définir quels emplacements du numéro d'appel sont valables, ce qui donne comme possibilités de sélection de l'appel individuel, l'appel à des groupes principaux, l'appel à des sous-groupes d'un groupe principal, l'appel au chef des groupes principaux ou au n°2 ou au n°3 etc. des groupes principaux, l'appel au chef des sous-groupes d'un groupe principal ou au n°2 ou au n°3 etc. des sous-groupes d'un groupe principal (tableau 3).
